# EUROPEAN PATENT SPECIFICATION

(11) **EP 4 562 832 B1**
(45) Date of publication and mention of the grant of the patent: **04.11.2026**
(21) Application number: 23768424.6
(22) Date of filing: 25.08.2023
(51) Int. Cl.: H04L 27/26, H04W 52/02, H04L 27/02

(54) **SIGNAL DESIGN FOR ULTRA-LOW POWER RECEIVERS**
SIGNALDESIGN FÜR EMPFÄNGER MIT EXTREM NIEDRIGER LEISTUNG
CONCEPTION DE SIGNAL POUR RÉCEPTEURS DE PUISSANCE ULTRA-FAIBLE

(30) Priority: 29.08.2022 US 202263401952 P
(43) Date of publication of application: 04.06.2025
(60) Divisional application: 26207977.5
(73) Proprietor: InterDigital Patent Holdings, Inc., Wilmington, DE 19809 (US)
(72) Inventor: ELKOTBY, Hussain, Conshohocken, Pennsylvania 19428 (US); ZHANG, Guodong, New York, New York 10120 (US); ADJAKPLE, Pascal, New York, New York 10120 (US); PRAGADA, Ravikumar, Conshohocken, Pennsylvania 19428 (US); GARCIA, Virgile, Conshohocken, Pennsylvania 19428 (US); LI, Yifan, Conshohocken, Pennsylvania 19428 (US)
(74) Representative: AWA Sweden AB
(86) International application number: PCT/US2023/031119
(87) International publication number: WO 2024/049706

(56) References cited:
- US-B2- 11 146 440
- XIAOFEI WANG (INTERDIGITAL): "On the Coexistence of 802.11ax and 802.11ba Signals", vol. 802.11ba, no. 1, 10 May 2017 (2017-05-10), pages 1 - 21, XP068115848, Retrieved from the Internet <URL:https://mentor.ieee.org/802.11/dcn/17/11-17-0659-01-00ba-on-the-coexistence-of-802-11ax-and-802-11ba-signals.pptx> [retrieved on 20170510]

## Description

### CROSS-REFERENCE TO RELATED APPLICATIONS

This application claims the benefit of U.S. Provisional Application No. 63/401,952, filed August 29, 2022.

### SUMMARY

One or more systems, devices, and methods address signal design for ultra-low power receivers. Transmitter and receiver architectures capable of generating signals and waveforms supporting the operation of ultra-low-power receivers and compatible with OFDM-based signals are disclosed. In some cases, there may be procedures that address one or more of the following: device detection of an on-off keying (OOK) modulated sequence with redundant bits corresponding to OFDM symbols' cyclic prefix; device detection of an OOK modulated sequence with dynamic bit duration corresponding to long and short OFDM symbols; device reception of an OOK modulated DCl/message with redundant bits corresponding to OFDM symbols' cyclic prefix; and/or, device reception of an OOK modulated DCl/message with dynamic bit duration corresponding to long and short OFDM symbols. US 11,146,440 discloses a wireless transmit/receive unit or access point that may generate a protocol data unit (PDU) of a first 802.11 protocol and a preamble and data of a second 802.11 protocol, wherein the preamble and data of the second 802.11 protocol may be arranged on resources of the PDU of the first 802.11 protocol with shaping sequences for concurrent transmission.

### BRIEF DESCRIPTION OF THE DRAWINGS

A more detailed understanding may be had from the following description, given by way of example in conjunction with the accompanying drawings, wherein like reference numerals in the figures indicate like elements, and wherein:
FIG. 1A is a system diagram illustrating an example communications system in which one or more disclosed embodiments may be implemented;
FIG. 1B is a system diagram illustrating an example wireless transmit/receive unit (WTRU) that may be used within the communications system illustrated in FIG. 1A according to an embodiment;
FIG. 1C is a system diagram illustrating an example radio access network (RAN) and an example core network (CN) that may be used within the communications system illustrated in FIG. 1A according to an embodiment;
FIG. 1D is a system diagram illustrating a further example RAN and a further example CN that may be used within the communications system illustrated in FIG. 1A according to an embodiment;
FIG. 2 illustrates an example of simplified block diagrams for mixer-first energy detection (ED) based OOK and FSK radios;
FIG. 3 illustrates an example of a simplified block diagram for a ULP receiver with an all-passive RF front-end;
FIG. 4 illustrates an example of the time offset between NWUS resources and associated paging occasions (PO) subframes;
FIG. 5 illustrates an example of a general WUR frame format;
FIG. 6 illustrates an example of WUR frame type indications;
FIG. 7 illustrates an example of WUR duty cycle period and service period;
FIG. 8 illustrates an example of interactions between legacy and WUR power states;
FIG. 9 illustrates an example of WUR basic PPDU format;
FIG. 10 illustrates an example WUR-Sync field generator;
FIG. 11 illustrates an example of a WUR-Data field generator;
FIG. 12 illustrates an example of On-WG for the WUR-Sync and HDR WUR-Data fields;
FIG. 13 illustrates an example of Ob-WG for the LDR WUR-Data field;
FIG. 14 illustrates an example of a transmitter architecture employing a single bit waveform generator;
FIG. 15 illustrates an example of a transmitter architecture employing a multi-bit waveform generator based on supported channel coding rate(s);
FIG. 16 illustrates an example of a transmitter architecture employing a multi-bit waveform generator based on coded bit stream parallelization;
FIG. 17 illustrates an example transmitter architecture employing a single bit waveform generator and dedicated IFFT/symbol extension modules;
FIG. 18 illustrates an example of a transmitter architecture employing a multi-bit waveform generator based on supported channel coding rate(s) and dedicates IFFT/symbol extension modules;
FIG. 19 illustrates an example of a transmitter architecture employing a multi-bit waveform generator based on coded bit stream parallelization and dedicated IFFT/symbol extension modules;
FIG. 20 illustrates an example of transmitter architecture employing TD Pulse Shaping and DFT modules to generate single and/or multi-bit waveforms per OFDM symbol;
FIG. 21 illustrates an example of transmitter architecture employing TD Pulse Shaping, DFT, and dedicated IFFT/Symbol Extension modules to generate single and/or multi-bit waveforms per OFDM symbol;
FIG. 22 illustrates an example of transmitter architecture employing TD Pulse Shaping, up-sampling, and frequency shifting modules to generate single and/or multi-bit waveforms per OFDM symbol;
FIG. 23 illustrates an example of an ULP receiver architecture based on nonlinear device (rectification) - based down-conversion;
FIG. 24 illustrates an example of an approach for Cyclic Prefix (CP) limitation on OOK signal design considering IFFT size of ***N*** = **2048,** subcarrier spacing **Δ*****f** =* **15*kHz*,** normal cyclic prefix configuration, and ***N_{bits}*** = **8** OOK bits/symbols per OFDM symbol;
FIG. 25 illustrates an example of an approach employing filler samples of ***H̅_{d}*** = **[116, 130]***^{T}*based on OFDM symbol number and considering IFFT size of ***N*** = **2048,** subcarrier spacing **Δ*****f** =* **15*kHz,*** normal cyclic prefix configuration, and ***N_{bits}*** = **8** OOK bits/symbols per OFDM symbol;
FIG. 25a shows a flow chart of the device's (e.g., WTRU) actions to receive and detect an OOK modulated sequence with filler samples.
FIG. 26 illustrates an example of a transmitter architecture employing TD Pulse Shaping and DFT modules to generate single and/or multi-bit waveforms per OFDM symbol with filler samples/duration;
FIG. 27 illustrates an example of an approach employing dedicated spectrum (option 1) or modules to distribute CP samples uniformly as guard intervals ***G̅I̅** =* [**20**, **18]*^{T}*** across OOK bits/symbols based on OFDM symbol number and considering IFFT size of ***N*** = **2048,** subcarrier spacing **Δ*****f** =* **15*kHz,*** normal cyclic prefix configuration, and ***N_{bits}*** = **8** OOK bits/symbols per OFDM symbol (option 2);
FIG. 28 illustrates an example of cross-correlation output considering a 16-bit maximal length sequence ***Z*** and two sequences ***s*₁** *=* **[*Z, Z*]** and ***s*₂** *=* **[*Z, Z̅***];
FIG. 29 illustrates an example of detector of sequences ***s*₁** and ***s*₂** using a single correlator and a single delay unit;
FIG. 30 illustrates an example of ULP signal frame structures;
FIG. 30a illustrates an example of a process of monitoring resources and waking-up the main radio upon detection of a sequence;
FIG. 31 illustrates an example configuration of LP-WUS resources consisting of two groups per paging occasion in a paging frame, each group associated with a configured time and frequency resource, and one or more OOK modulated sequences corresponding to the number of configured sub-groups per paging occasion;
FIG. 32 illustrates an example configuration of always-on operation for monitoring of LP-WUS resources comprising two frequency resources (corresponding to two POs) and two time-resources/windows (each associated with one or more OOK modulated sequences) for indication of groups and sub-groups per a PO;
FIG. 33 illustrates a flow chart of a device's (e.g., WTRU, BS, etc.) actions to transmit an OOK modulated sequence;
FIG. 34 illustrates a flow chart of a devices' (e.g., WTRU) actions to receive and detect an OOK modulated sequence;
FIG. 35 illustrates a flow chart of a device's (e.g., WTRU, BS, etc.). actions to transmit an OOK modulated DCl/message;
FIG. 36 illustrates a flow chart of a device's (e.g., WTRU) actions to receive and detect an OOK modulated DCI and/or message; and
FIG. 37 illustrates a flor chart of a device's (e.g., WTRU) actions to receive and detect an OOK modulated DCI and/or message.

### DETAILED DESCRIPTION

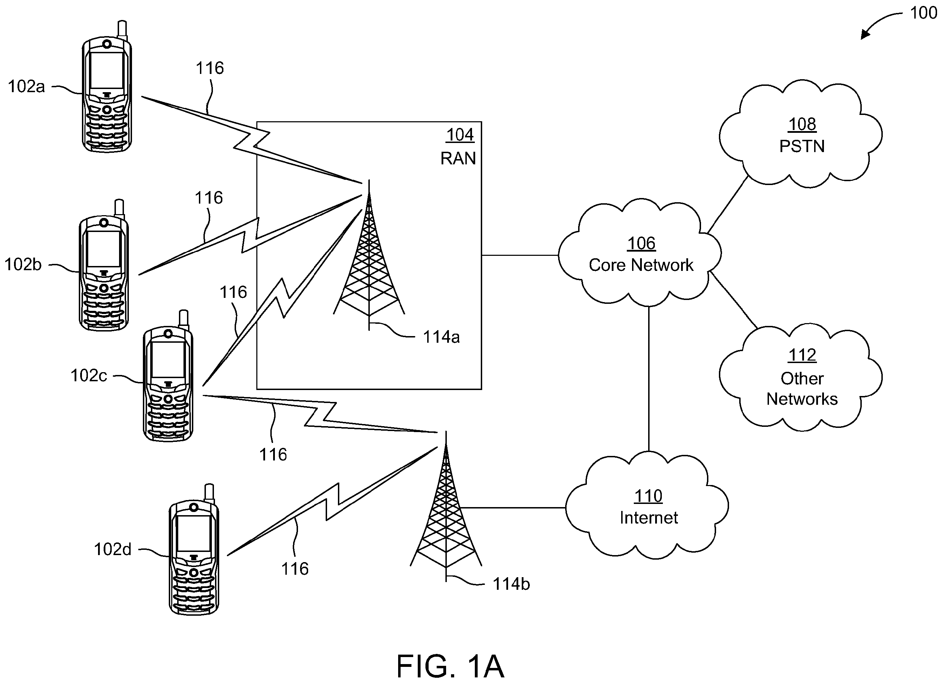

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word discrete Fourier transform Spread OFDM (ZT-UW-DFT-S-OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a radio access network (RAN) 104, a core network (CN) 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a station (STA), may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106, the Internet 110, and/or the other networks 112. By way of example, the base stations 114a, 114b may be a base transceiver station (BTS), a NodeB, an eNode B (eNB), a Home Node B, a Home eNode B, a next generation NodeB, such as a gNode B (gNB), a new radio (NR) NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, and the like. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed Uplink (UL) Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using NR.

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106.

The RAN 104 may be in communication with the CN 106, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104 and/or the CN 106 may be in direct or indirect communication with other RANs that employ the same RAT as the RAN 104 or a different RAT. For example, in addition to being connected to the RAN 104, which may be utilizing a NR radio technology, the CN 106 may also be in communication with another RAN (not shown) employing a GSM, UMTS, CDMA 2000, WiMAX, E-UTRA, or WiFi radio technology.

The CN 106 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

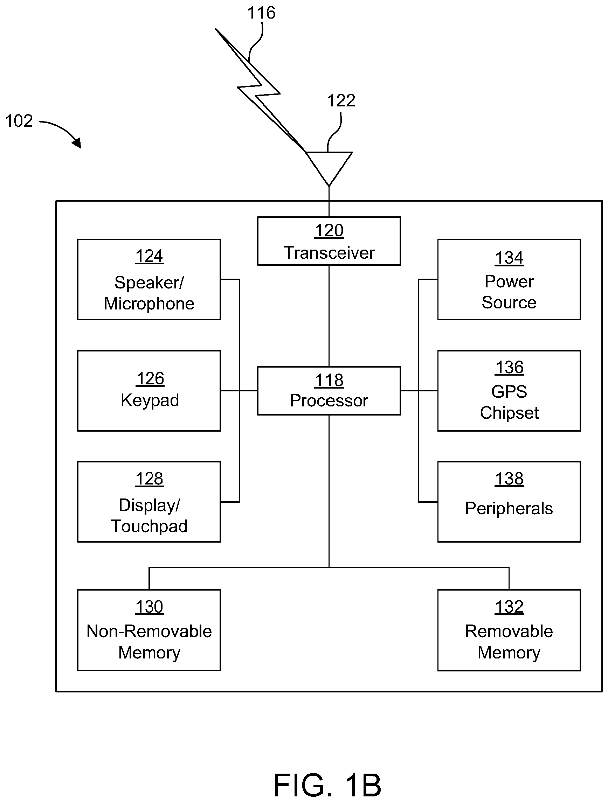

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general-purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs), any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors. The sensors may be one or more of a gyroscopes, an accelerometer, a hall effect sensor, a magnetometer, an orientation sensor, a proximity sensor, a temperature sensor, a time sensor; a geolocation sensor, an altimeter, a light sensor, a touch sensor, a magnetometer, a barometer, a gesture sensor, a biometric sensor, a humidity sensor and the like.

The WTRU 102 may include a full duplex radio for which transmission and reception of some or all of the signals (e.g., associated with particular subframes for both the UL (e.g., for transmission) and DL (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the UL (e.g., for transmission) or the DL (e.g., for reception)).

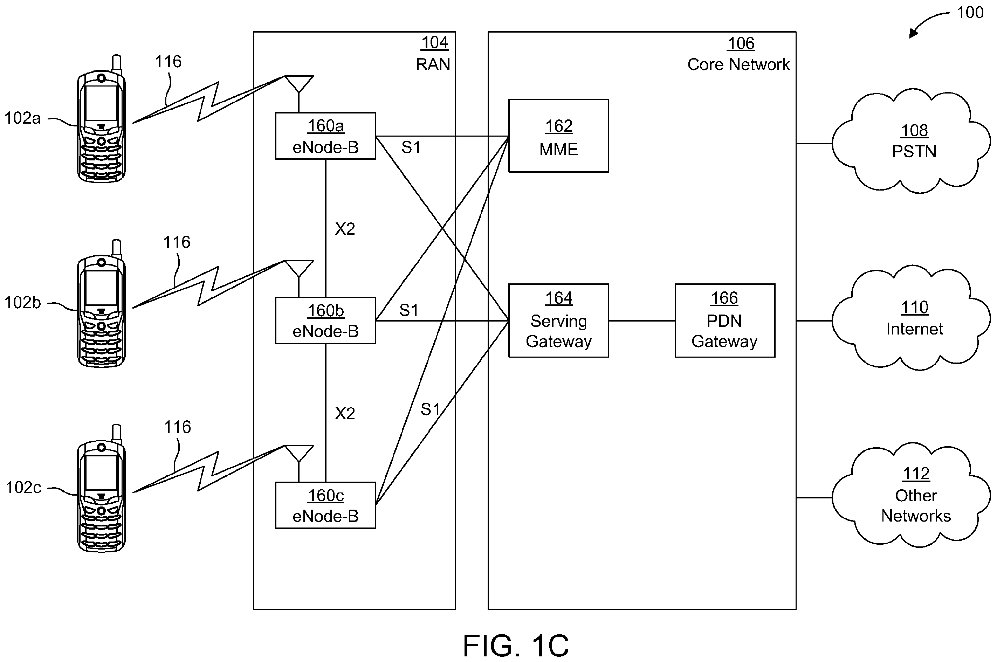

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width. The primary channel may be the operating channel of the BSS and may be used by the STAs to establish a connection with the AP. In certain representative embodiments, Carrier Sense Multiple Access with Collision Avoidance (CSMA/CA) may be implemented, for example in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz, and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications (MTC), such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode) transmitting to the AP, all available frequency bands may be considered busy even though a majority of the available frequency bands remains idle.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

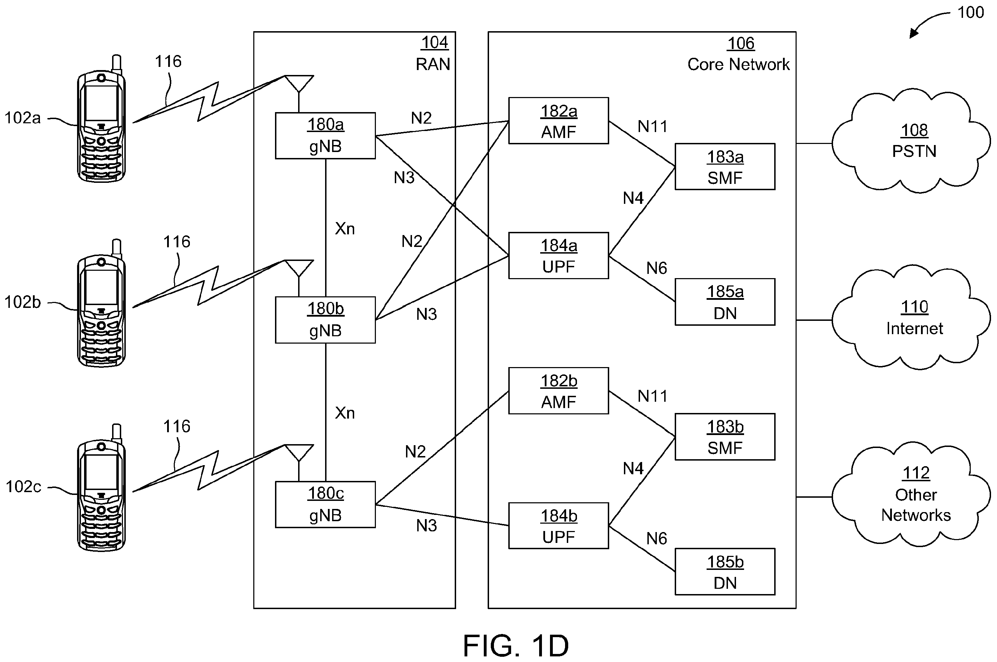

FIG. 1D is a system diagram illustrating the RAN 104 and the CN 106 according to an embodiment. As noted above, the RAN 104 may employ an NR radio technology to communicate with the WTRUs 102a, 102b, 102c over the air interface 116. The RAN 104 may also be in communication with the CN 106.

The RAN 104 may include gNBs 180a, 180b, 180c, though it will be appreciated that the RAN 104 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, DC, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 106 shown in FIG. 1D may include at least one AMF 182a, 182b, at least one UPF 184a, 184b, at least one Session Management Function (SMF) 183a, 183b, and possibly a Data Network (DN) 185a, 185b. While the foregoing elements are depicted as part of the CN 106, it will be appreciated that any of these elements may be owned and/or operated by an entity other than the CN operator.

The AMF 182a, 182b may be connected to one or more of the gNBs 180a, 180b, 180c in the RAN 104 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of non-access stratum (NAS) signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for MTC access, and the like. The AMF 182a, 182b may provide a control plane function for switching between the RAN 104 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 106 via an N11 interface. The SMF 183a, 183b may also be connected to a UPF 184a, 184b in the CN 106 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing DL data notifications, and the like. A PDU session type may be IP-based, non-IP based, Ethernet-based, and the like.

The UPF 184a, 184b may be connected to one or more of the gNBs 180a, 180b, 180c in the RAN 104 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering DL packets, providing mobility anchoring, and the like.

The CN 106 may facilitate communications with other networks. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local DN 185a, 185b through the UPF 184a, 184b via the N3 interface to the UPF 184a, 184b and an N6 interface between the UPF 184a, 184b and the DN 185a, 185b.

Generally, any network side device/node/function/base station, in FIGs. 1A-1D, and/or described anywhere herein, may be interchangeable, and reference to the network may refer to any entity on the network side (e.g., in a communication between a WTRU and a network entity, such as a base station or other functional entity), unless otherwise specified or distinguished.

In view of FIGs. 1A-1D, and the corresponding description of FIGs. 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

In state-of-the-art wireless technology such as cellular and WLAN, RF front-ends can be comprised of many different configurations, such as a mix of passive and active components. For example, passive components include Rx antennas, Tx/Rx path switches, and/or filters. These components require little, if any, power in order to function. On the other hand, active components require power in order to function. For example, an oscillator to tune to the carrier frequency, a low noise amplifier, and an A/D converter in the Rx path are a few examples of active components.

Advances in RF component design have made it possible to use a novel type of RF circuitry that can process received RF waveforms which are collected through the antenna front-end by the receiving device in an Ultra-Low Power (ULP) mode with minimal usage, or even absence, of an active power supply. Such advances may be incorporated into a device, such as a WTRU and/or a base station. For example, such a device may consider only passive RF components and harvest energy from the received RF waveform to run the necessary circuitry to process signals. Another approach is to use a mixer-first architecture, which eliminates the need for an RF low noise amplifier (LNA), and focuses on the development of passive RF components. Passive, or almost passive, ULP receivers use RF components such as cascading capacitors, zero-bias Schottky diodes, or MEMS to implement the functionality required for voltage multipliers or rectifiers, charge pumps, and signal detectors. It is worth considering that those ULP receivers can still operate in the antenna far-field and may support reasonable link budgets.

Those novel ULP receivers can perform basic signal detection such as correlation for a known signature waveform and/or reception of low data rate signals. They may also be put into energy harvesting mode by accumulating energy from the RF waveform entering the receiver front-end through the Rx antenna. Link budgets characteristic of small or medium area cellular base stations may be supported as well. For example, ULP receivers can be used as wake-up radios to trigger device internal wake-up and signal interrupts following the detection of wake-up signaling which then prompts the main modem receiver using active RF components to start up.

The reduction in device power consumption is considerable when ULP receivers are used. A typical cellular modem transceiver (e.g., 3G, 4G, 5G, or etc.) may easily require up to a few hundred mWs in order to demodulate and process received signals during active reception such as in RRC_CONNECTED mode. Power consumption scales with the number of RF front-end chains active on the device, the channel bandwidth used for reception, and the received data rate. When the device is in RRC_IDLE mode with no data being received or transmitted, cellular radio power saving protocols such as (e)DRX ensure that the receiver only needs to be powered on a few times per second at most. Typically, the device then performs tasks such as measuring the received signal strength of the serving and/or neighbor cells for the purpose of cell (re-)selection procedures and reception of paging channels. In addition, the device performs AFC and channel estimation in support of coherent demodulation. Device power consumption when in RRC_IDLE is in the order of several mWs. For some eMTC and NB-loT use cases, sequence detection circuitry for processing of in-band wake-up signals in RRC_IDLE mode may also be implemented in the form of a dedicated wake-up receiver. This allows powering down the A/D converters and significant parts of the digital baseband processor. However, several active components in the RF front-end such as low-noise amplifiers and oscillators are still used where the LNA power consumption is usually in the milliwatt range. On the other hand, ULP receivers can reduce device's power consumption in RRC_IDLE to about or below 1 mW by removing the RF LNA and having power consumption dominated by only the local oscillator.

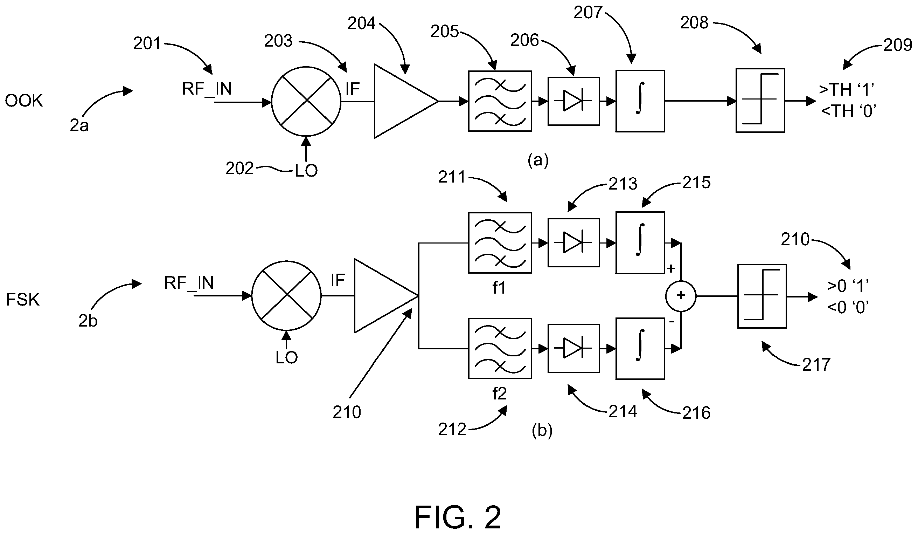

On-Off Keying (OOK) and Frequency-Shift Keying (FSK), are two types of modulation schemes used in ULP receivers with OOK being an attractive option when designing ULP radios due to its simplicity. FIG. 2 illustrates an example of simplified block diagrams for mixer-first energy detection (ED) based OOK 2a and FSK 2b radios. A Radio Frequency (RF) 201 signal is multiplied by a signal generated by a Local Oscillator (LO) 202, resulting in a signal in Intermediate Frequency (IF) 203. The IF signal goes through an amplifier 204. In case of an OOK modulated signal, the amplified signal goes through a band pass filter 205. The output signal goes through an envelope detector 206, which recovers the baseband signal, followed by an integrator stage (e.g., a capacitor) 207 which is used to temporarily store energy from the detector, thus maintaining a logical state constant until the next bit/state. A threshold is configured in a comparator 208 to determine the receive data logic state.

For the case of an FSK modulated signal, the amplified signal is split and each goes through its own bandpass filter. Each bandpass filter 211, 212 is tuned to the mark frequency (i.e., frequency associated to bit 1) and it allows only the frequency of interest to pass. An envelope detector 213, 214 is used to recover baseband signal at f1 and f2. In 215, 216, integrator stages are used to temporarily store energy from the detectors at f1 and f2. The resulting signal amplitude is compared 215, and if it is greater than zero, the output is one, otherwise it is zero.

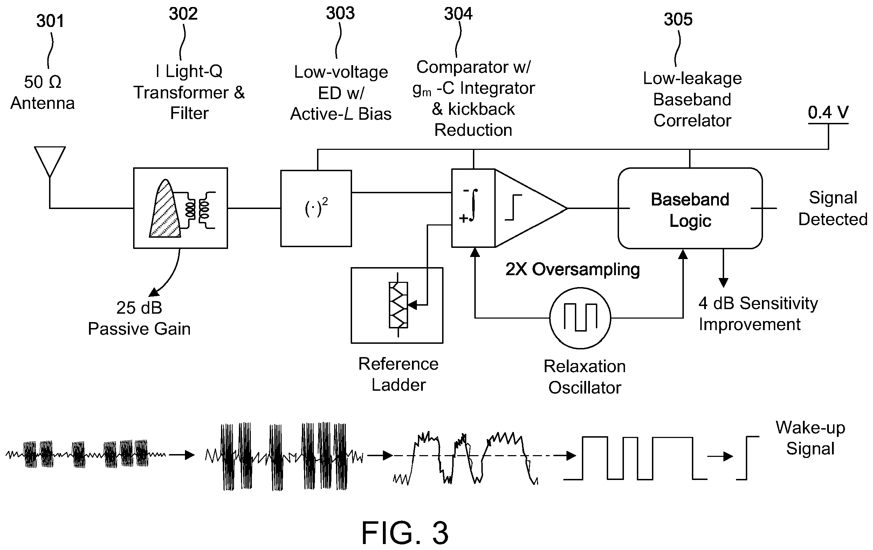

FIG. 3 illustrates an example of a simplified block diagram for a ULP receiver with an all-passive RF front-end. The RF signal 301 is amplified 302 and a low voltage bias is applied 303 followed by a comparator 304 and a baseband logic 305, resulting in the signal of interest.

A Wake-Up-Signal (WUS) may be used in NB-IoT/MTC device use cases. Additionally, there may be group WUSs. The NWUS sequence *w*(*m*) in subframe *x =* 0, 1, *... , M -* 1 is defined as: $w \left(m\right) = {θ}_{{n}_{f} , {n}_{s}} \left(m′\right) ⋅ {e}^{- \frac{jπun \left(n+1\right)}{131}} {e}^{\frac{j 2 πgm}{132}}$ $m = 0 , 1 , … , 131$ $m ′ = m + 132 x$ $n = m mod 132$ ${θ}_{{n}_{f} , {n}_{s}} \left(m′\right) = \left\{\begin{matrix}1 , if {c}_{{n}_{f} , {n}_{s}} \left(2m′\right) = 0 and {c}_{{n}_{f} , {n}_{s}} \left(2m′+1\right) = 0 \\ - 1 , if {c}_{{n}_{f} , {n}_{s}} \left(2m′\right) = 0 and {c}_{{n}_{f} , {n}_{s}} \left(2m′+1\right) = 1 \\ j , if {c}_{{n}_{f} , {n}_{s}} \left(2m′\right) = 1 and {c}_{{n}_{f} , {n}_{s}} \left(2m′+1\right) = 0 \\ - j , if {c}_{{n}_{f} , {n}_{s}} \left(2m′\right) = 1 and {c}_{{n}_{f} , {n}_{s}} \left(2m′+1\right) = 1\end{matrix}\right.$ $u = \left({N}_{ID}^{Ncell} mod 126\right) + 3$

Where the initialization of the scrambling sequence *c_{n_{f},nₛ}*(*i*), *i* = 0,1, ..., 2 . 132 *M* - 1*,* is dependent on the serving cell ID, ${N}_{ID}^{Ncell}$, the first frame of the first PO to which NWUS is associated, *n*_{*f*_*start*_*PO*}, the first slot of the first PO to which NWUS is associated, *n_{s_start_PO},* and ${N}_{ID}^{resource}$ which indicates the group NWUS resource to which the WTRU is associated. The parameter *g* is defined in terms of ${N}_{group}^{WUS}$, which is determined by the WTRU group to which the WTRU is associated as determined by higher layers, as shown: $g = 14 \left({N}_{group}^{WUS}+1\right) for 0 \leq {N}_{group}^{WUS} \leq 7$

Each Zadoff-Chu sequence, w(m), of length 132 in the NWUS is transmitted over 12 subcarriers in the NB-IoT carrier in symbols $l = 3 , 4 , … , 2 {N}_{symb}^{DL} - 1$ of each subframe where ${N}_{symb}^{DL}$ is the number of OFDM symbols per slot.

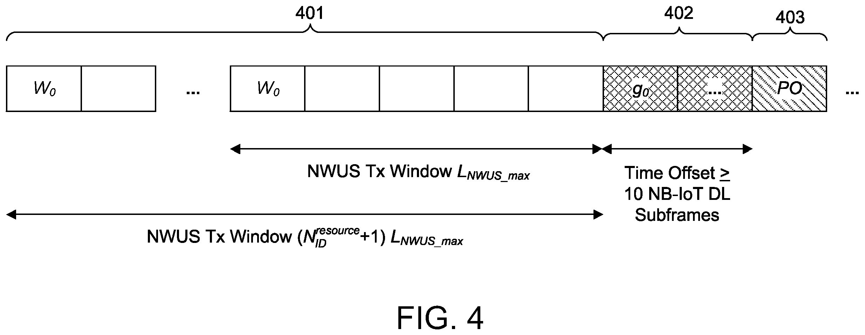

FIG. 4 illustrates an example of the time offset 402 between NWUS resources 401 and associated paging occasions (PO) subframes 403. The NB-loT WTRU has a certain set of assumptions to assist in the NWUS detection. The UE may be configured with up two NWUS, a WUS group and a common WUS, and no more than NWUS sequence may be transmitted per NWUS resource at a given time. The actual duration of an NWUS is one of the values in the set listed Table 1 based on a configured maximum duration of *L*_{NWUS_*max*} subframes. The NWUS and associated paging occasion (PO) subframes are on the same NB-IoT carrier and there is at least 10 NB-loT DL subframes between end of maximum NWUS duration and first NB-loT PO subframe as shown in FIG. 4.

**Table 1: Actual NWUS durations in NB-IoT DL subframes or subframes containing SystemInformationBlockType1-NB.**

| ***L_{NWUS_max}*** | **Actual NWUS durations set** |
|---|---|
| 1 | {1} |
| 2 | {1, 2} |
| 4 | {1, 2, 4} |
| 8 | {1, 2, 4, 8} |
| 16 | {1, 2, 4, 8, 16} |
| 32 | {1, 2, 4, 8, 16, 32} |
| 64 | {1, 2, 4, 8, 16, 32, 64} |
| 128 | {1, 2, 4, 8, 16, 32, 64, 128} |
| 256 | {1, 2, 4, 8, 16, 32, 64, 128, 256} |
| 512 | {1, 2, 4, 8, 16, 32, 64, 128, 256, 512} |
| 1024 | {1, 2, 4, 8, 16, 32, 64, 128, 256, 512, 1024} |

NB-loT WTRU may implement Paging with wake up signal (e.g., group) only in the cell in which the WTRU most recently entered RRC_IDLE state, which may be triggered by any of: reception of *RRCEarlyDataComplete*; or reception of *RRCConnectionRelease* not including *noLastCellUpdate*; or reception of *RRCConnectionRelease* including *noLastCellUpdate* and the WTRU was using (G)WUS in this cell prior to this RRC connection attempt. Upon detection of a WUS, the WTRU may perform the following: If DRX is configured: monitor the following PO; or If eDRX is configured: monitor the following *numPOs* POs or until a paging message including WTRU's NAS identity is received, whichever is earlier.

The *numPOs* is the Number of consecutive POs mapped to one WUS provided in system information where (*numPO*s≥1)*.* On the other hand, the WTRU may monitor every PO until the start of next WUS or until the PTW ends, whichever is earlier, upon missing a WUS occasion, such as due to cell reselection. The NB-loT WTRU may be configured with up to 2 WUS resources, such as ${N}_{ID}^{resource}$, numbered 0 and 1.

In some cases, DCI based WUS design may be implemented. For example, DCI format 2_6 may be used to indicate a WUS for the WTRU in RRC Connected State. In some cases, DCI based PEI design may be implemented. For example, DCI format 2_7 may be used to indicate Paging and TRS availability for one or more WTRUs in RRC IDLE/inactive State. A DCI of format 2_7 may carry paging early indication, such as a bitmap, for up to 8 subgroups per PO and may be associated with up to 8 Pos. For example, each bit in the bitmap is associated with a subgroup within one of the associated POs. The WTRU may monitor DCI format 2_7 and if it detects the bit corresponding to its subgroup within its PO set to '1', the WTRU monitors the PO. Otherwise, the WTRU is not required to monitor the PO. Subsequently, the WTRU may need one or more of the following information for the correct detection of DCI format 2_7: *peiSearchSpace,* which is a search space to monitor PDCCH according to Type2A-PDCCH CSS set; *PEI-F_offset,* which is the number of frames from the start of a first PF, associated with PDCCH monitoring occasions for DCI format 2_7, to the start of a frame; *firstPDCCH-MonitoringOccasionOfPEI-O,* which is the number of symbols from the start of the frame to the start of the first PDCCH monitoring occasion for DCI format 2_7; *payloadSizeDCI_format2_7,* which is payload size; *subgroupsNumPerPO* ( ${N}_{SG}^{PO}$), which is number of subgroups per paging occasion; and/or, *PONumPerPEI* ( ${N}_{PO}^{PEI}$), which is number of paging occasions associated with a PEI in a DCI format 2_7.

The paging indication field of DCI format 2_7 may comprise ${N}_{PO}^{PEI}$ segments of K bits where $K = {N}_{SG}^{PO}$ if ${N}_{SG}^{PO} > 0$ and *K =* 1 otherwise. The WTRU may determine a value ('1' or '0') for the (*i_{PO}* · *K + i_{SG}*) bit, where ${i}_{PO} = \left(\left({UE}_{IDmodN}\right)⋅{N}_{S}+{i}_{S}\right) {modN}_{PO}^{PEI}$ is a paging occasion index and *i_{SG}* is a subgroup index, 0 ≤ *i_{SG} < K,* to indicate whether it should monitor the next PO or not.

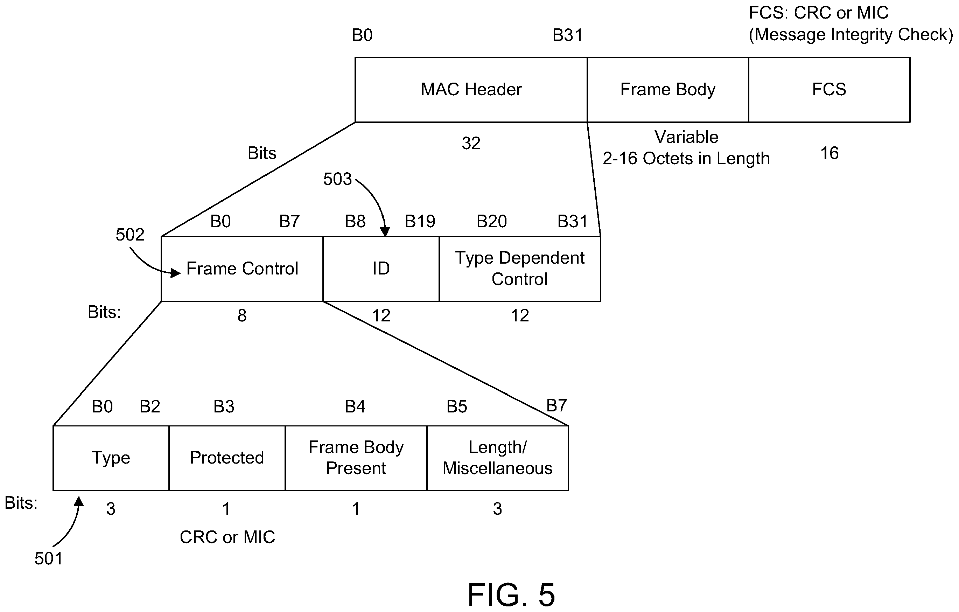

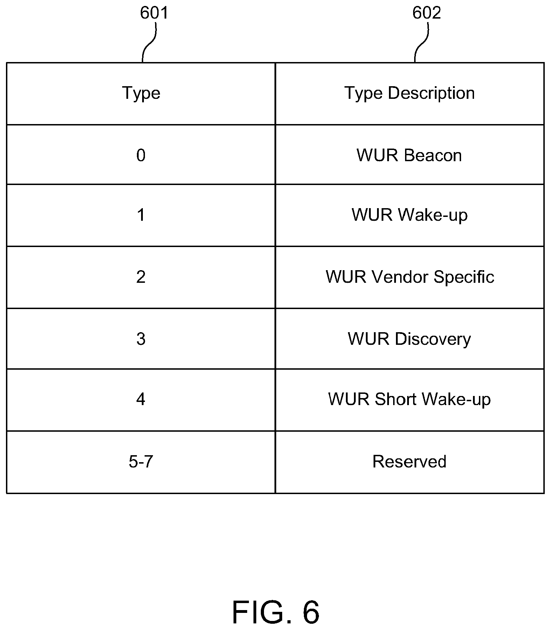

In some wireless systems (e.g., IEEE 802.11ba), there may be a waveform generation of wake-up packets (WUPs) over the physical layer (PHY) and the relevant MAC procedures may be used. In such a configuration, there may be more than one different wake-up radio (WUR) frame formats: WUR Beacon, which maintains timing synchronization via partial Timing Stamp Field (TSF) to enable WUR duty-cycled operation; WUR (short) wake-up, which provides individual as well as group wake-up notifications to WUR STAs; WUR Discovery, which supports discovery of WUR access points (APs) by a WUR non-AP station (STA) at low power consumption; and/or, Vendor Specific, which supports vendor specific operation. FIG. 5 illustrates an example of a general WUR frame format (e.g., for IEEE 802.11ba), where the frame format type is indicated in the Type field 501 of the Frame Control field 502 (e.g., according to Table 9-541a of IEEE 802.11ba). FIG. 6 shows a table mapping the Type field 601 to its description 602.

Referring to Fig.5, the identifier (ID) space 503 (e.g., IEEE 802.11ba), based on 12 bits, is comprised of all integers ∈ {0, 1, ..., 4095}. A WUR group ID space is a subset of consecutive values obtained from the identifier's space where the WUR AP shall randomly select the starting value of the WUR group ID space and all WUR group IDs may not match any of the WUR IDs, transmitter ID, and nontransmitter IDs (if any). The nontransmitter ID identifies a non-transmitted BSSID from the multiple BSSID set and shall be calculated as *k + transmitter ID mod* 2¹² where k is equal to the BSSID index field corresponding to that BSS. The WUR AP shall assign to each WUR non-AP STA a WUR ID that uniquely identifies the WUR non-AP STA within the BSS (e.g., a BSS of the Multiple BSSID set) of the WUR AP (e.g., that the WUR AP is a member) where the WUR ID may be selected randomly from the identifier's space or calculated based on an Association Identifier and the transmitter ID. The WUR AP may then maintain a list of IDs and ensure each ID is either: A Transmitter ID, a WUR group ID, a WUR ID, a Nontransmitter ID, or Portion of OUI.

The WUR non-AP STA may maintain a list of multiple IDs including a: WUR ID for individually addressed Fixed Length (FL) WUR Wake-up frames; transmitter ID for WUR Beacon, WUR Discovery frames, and for broadcast Wake-up frames sent by the AP corresponding to the transmitted BSSID; a nontransmitter ID for broadcast WUR Wake up frames sent by the AP corresponding to the non-transmitted BSSID; set containing zero or more instances of 12 LSBs of an OUI for WUR Vendor Specific frames; and/or, a set containing zero or more instances of a group ID for group addressed FL WUR frames and for Variable Length (VL) WUR Wake-up frames. FIG. 6 illustrates an example of WUR frame type indications (e.g., in IEEE 802.11ba).

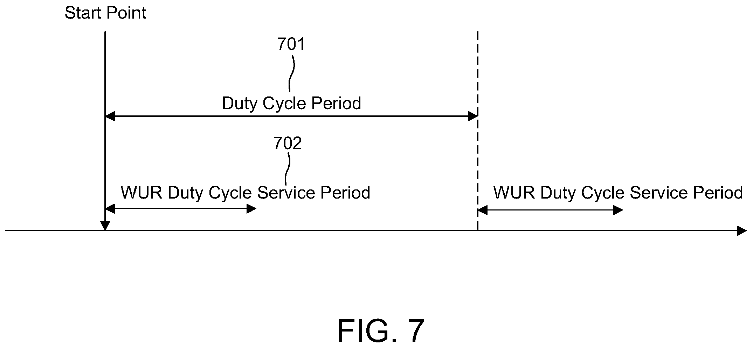

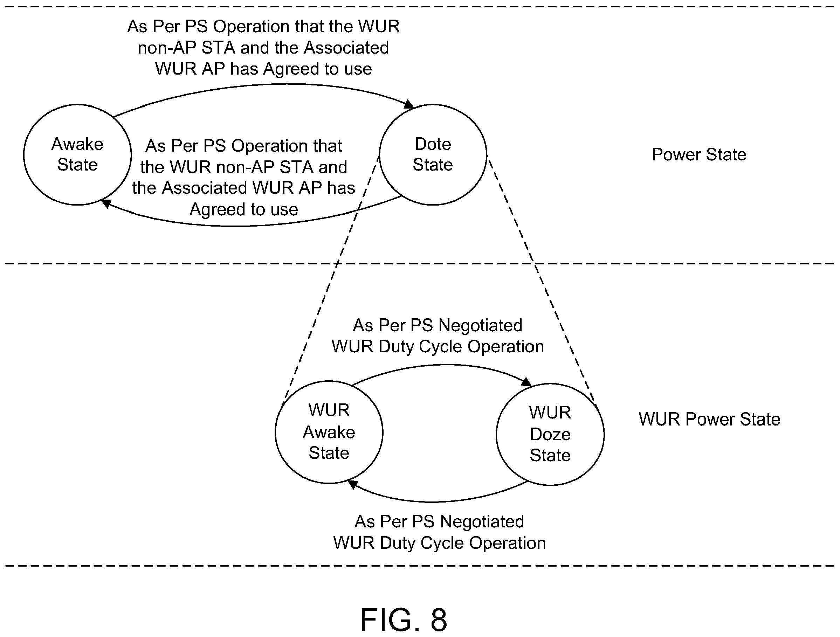

FIG. 7 illustrates an example of WUR duty cycle period 701 and service period 702. The WUR non-AP STA maintains synchronization with the AP STA using WUR Beacon frames that includes partial TSF time, such as bits [5:16], and is expected to be received periodically, such as every *dot11WURBeaconPeriod,* or within WUR duty cycle service periods 702, which occur at every duty cycle period 701 if the WUR AP accepted to transmit keep-alive WUR frames. Upon failure of the WUR non-AP STA to receive WUR Beacon frames for a time period, which is implantation specific, it shall either perform WUR scanning or transition to awake state. Further, WUR Beacon frames shall be transmitted at a data rate that is supported by all WUR non-AP STAs that have negotiated WUR power management service. The WUR duty cycle operation allows a WUR AP to manage WUR activity in the BSS by scheduling a WUR non-AP STA to receive WUR frames at different times. The interaction between legacy and WUR power states is shown in FIG. 8.

As part of the WUR wake-up operation, the WUR AP may transmit a (e.g., short) WUR Wake-up frame to an associated WUR non-AP STA to indicate that individually addressed Buffered Units (BU(s)) are available for the non-AP STA. The WUR AP may also transmit a broadcast WUR Wake-up frame with the Group Addressed BU subfield of the Miscellaneous subfield equal to 1 to indicate that group addressed BU(s) of the WUR AP are available for all the associated WUR non-AP STA(s). Additionally, the WUR AP may transmit a broadcast WUR Wake-up frame to associated WUR non-AP STA(s) to indicate that a critical update to the BSS parameters of the WUR AP has occurred for the associated WUR non-AP STA. The critical update is indicated in the Counter subfield of the Type Dependent Control field. Specific to the short wake-up frame operation, the WUR AP may configure a new random WUR ID at the WUR non-AP STA when the WUR AP receives one or more frames from the WUR non-AP STA, but not a WUR Wake-up Indication frame with a WUR Wake-up Indication field indicating UNSOLICITED_WAKEUP. Further, The WUR AP may not retransmit a WUR Short Wake-up frame, alternatively, the WUR AP may retransmit a WUR Wake-up frame.

The WUR AP may schedule a transmission that is not a WUR PPDU to the WUR non-AP STA if the transition delay indicated by the WUR non-AP STA following the most recent transmitted WUR (e.g., Short) Wake-up frame intended to the WUR non-AP STA has expired; or the WUR non-AP STA has indicated that it is in the awake state by transmitting a frame to the WUR AP. The WUR AP that generates a VL WUR Wake-up frame with two or more STA Info fields may order the STA Info fields in the Frame Body field so that the WUR IDs appear in increasing order. Subsequently, the WUR STA may stop processing the VL WUR frame once the STA locates a User Info field that contains the WUR ID of the STA or a WUR ID that is greater than the WUR ID of the STA.

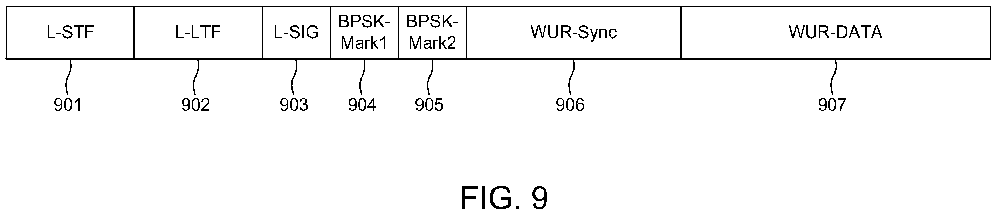

FIG. 9 illustrates an example of WUR basic PDU format. The WUR PHY may support two data rates, a Low Data Rate (LDR) indicating 62.5 kbps and a High Data Rate (HDR) indicating 250 kbps. It uses multicarrier on-off keying (MC-OOK) modulation where the multicarrier signal is generated using 13 subcarriers, centered within a 20 MHz channel, with subcarrier spacing of 312.5 kHz and subcarrier coefficients may take values from any of the BPSK, QPSK, and M-QAM constellation symbols. The WUR PHY further provides support for encoding, which may be applied to the data field. The WUR physical layer protocol data unit (PPDU), shown in FIG. 9, comprises a WUR-Data field and a WUR PHY preamble. The WUR PHY preamble includes the legacy preamble fields: Legacy Short Training Field (L-STF) 901, Legacy Long Training Field (L-LTF) 902, and Legacy Signal 903 consisting of 24 bits that contain rate, length, and parity information, followed by BPSK Mark1 904 and Mark2 905. These fields aid in protection of a WUR-Sync 906 and a WUR-Data fields 907. The WUR-Sync field 906 aids in the detection, demodulation, and delivery of the WUR-Data field 907. The WUR-Sync field 906 is either 64*µs* (32-bit sequence) or 128*µs* (64-bit sequence) long based on the selected data rate for the WUR-Data field.

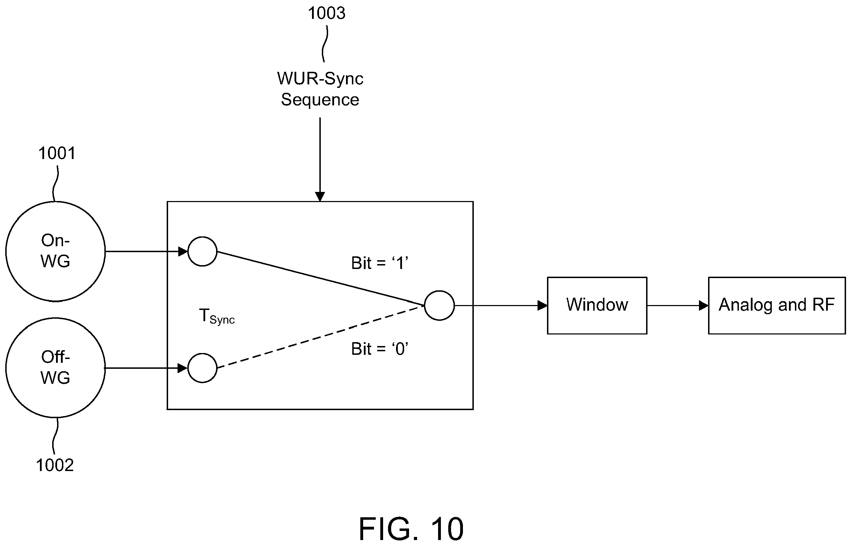

FIG. 10 illustrates an example of WUR-Sync field generator. The WUR-Sync field generator comprises an "On" waveform generator (On-WG) 1001, an "Off" waveform generator (Off-WG) 1002, and a WUR sync sequence 1003, as it is shown in FIG. 10.

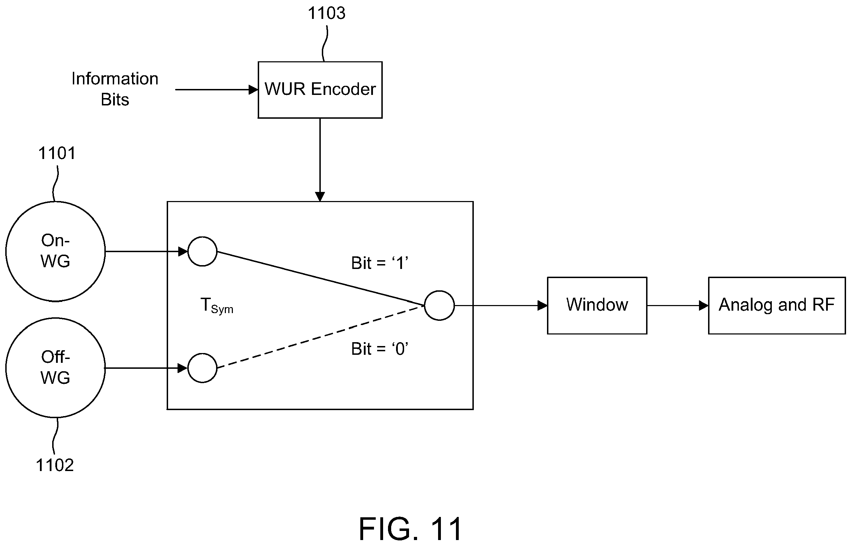

The WUR-Data field generator is illustrated in FIG. 11 and it consists of an "On" waveform generator (On-WG) 1101, an "Off" waveform generator (Off-WG) 1102, and a WUR encoder 1103. The "On" waveform generator (On-WG) 1101 and the "Off" waveform generator (Off-WG) 1102 for the WUR-Data field are data rate dependent and the data rate is indicated by the WUR-Sync field (Fig. 9, 906). The WUR LDR is indicated using a repeated sequence, ([*W W*])*,* whereas the WUR HDR is indicated using a bitwise complement of the sequence *W* where the sequence *W* is a 32-bit sequence of duration 64*µs.* The sequence *W* and its bit-wise complement *W̅* are defined as: $W = \left[1 0 1 0 0 1 0 0 1 0 1 1 1 0 1 1 0 0 0 1 0 1 1 1 0 0 1 1 1 0 0 0\right]$ $\overline{W} = \left[0 1 0 1 1 0 1 1 0 1 0 0 0 1 0 0 1 1 1 0 1 0 0 0 1 1 0 0 0 1 1 1\right]$

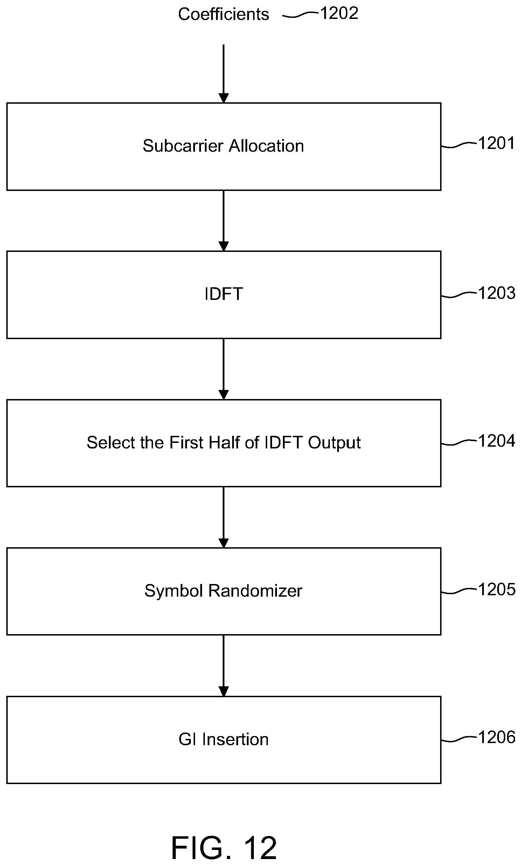

FIG. 12 illustrates an example of On-WG for the WUR-Sync and HDR WUR-Data fields. The On-WG for the WUR-Sync and HDR WUR-Data fields is a 2*µs* long MC-OOK symbol that is constructed using center 13 subcarriers 1201 of a 64-IDFT 1203, sampled at 20 MHz, where the 6 subcarriers 1201 with indices *k* = (-6, -4, -2, 2, 4, 6) are used with non-zero input and the rest of the center 13 subcarriers 1201 are null. The coefficients 1202 of the non-zero subcarriers are selected from BPSK, QPSK, 16-QAM, 64-QAM, and/or 256-QAM constellation symbols. Then as shown in FIG. 12, the first 32 values 1204 of the output of the 64-point IDFT are selected and processed by a symbol randomize 1205, which is used to prevent spectral lines due to the repetition of the same On-WG. The last 8 samples of the selected 32 samples are then prepended to the selected 32 samples as a guard interval (GI) 1206, generating a total of 40 samples corresponding to the duration of 2*µs.* The Off-WG generates the "Off' symbol as zeros for the duration of 2*µs.*

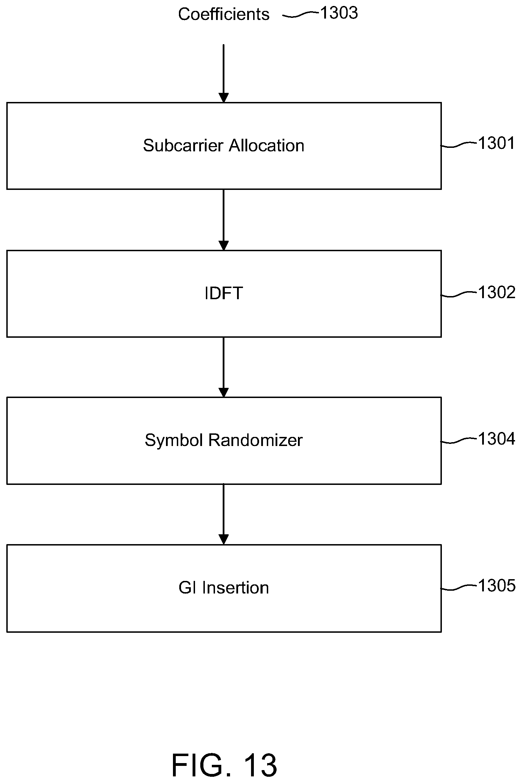

FIG. 13 illustrates an example of On-WG for the LDR WUR-Data field. The On-WG for the LDR WUR-Data field is a 4*µs* long MC-OOK symbol that is constructed using center 13 subcarriers 1301 of a 64-IDFT 1302, sampled at 20 MHz, where the 12 subcarriers with indices *k* = (-6, -5, ... , -1, 1, ... , 5, 6) are used with non-zero input and the rest of the 64 subcarriers are null. The coefficients 1303 of the non-zero subcarriers are selected from BPSK, QPSK, 16-QAM, 64-QAM, and/or 256-QAM constellation symbols. Then as shown in FIG. 13, the 64 values of the output of the 64-point IDFT 1302 are processed by a symbol randomizer 1304, which is used to prevent spectral lines due to the repetition of the same On-WG. The last 16 samples of the 64 samples are then prepended to the 64 samples as a guard interval (GI) 1305, generating a total of 80 samples corresponding to the duration of 4*µs.* The Off-WG generates the "Off' symbol as zeros for the duration of 4*µs.*

The WUR-Data field may be encoded by WUR encoding as in Table 2 for WUR LDR and as in Table 3 for WUR HDR. The WUR LDR encoded bit is 4 *µs* long and the WUR HDR encoded bit is 2 *µs* long, resulting in a WUR LDR information bit of 16 *µs* and a WUR HDR information bit of 4 *µs.*

**Table 2: WUR encoded bits for WUR LDR**

| Input Bit | Encoded Bits |
|---|---|
| 0 | 1010 |
| 1 | 0101 |

**Table 3: WIR encoded bits for WUR HDR**

| Input Bit | Encoded Bits |
|---|---|
| 0 | 10 |
| 1 | 01 |

In some situations, WTRUs may spend much of their time in RRC IDLE state or RRC inactive state and therefore power consumption associated with IDLE mode or RRC inactive mode operation can have a strong impact on the WTRU's battery life, especially due to the physical downlink control channel (PDCCH) monitoring during (e.g., paging occasions). Unlike existing state-of-the-art devices, a WTRU implementing/deploying an Ultra-Low Power (ULP) (e.g., passive or semi-passive) receiver can benefit from extremely low (e.g., near zero) power consumption when it is not actively performing transmission or high data rate reception. Therefore, enabling a ULP receiver to offload some of the functionality (e.g., monitoring of wake-up signals, processing of paging early indications (PEIs), and/or processing of paging occasions) from the main receiver can provide significant WTRU power saving gains.

However, ULP receivers require special signal design that incorporates simple modulation and coding schemes such as On-Off Keying (OOK) modulation and Manchester coding. Such simple modulation and coding schemes may require specific and/or suitable signal and/or channel designs for ULP receivers.

In one scenario, there may be an OFDM based signal/waveform that is specific to low power receivers as it incorporates both multi-carrier (MC) OOK modulation and simple coding schemes similar to Manchester coding (e.g., IEEE 802.11ba). However, the OOK signal design in this scenario may not be applied directly to cellular systems due to one or more potential issues.

One possible issue is related to resource efficiency. For example, in certain instances 20 MHz is dedicated to the MC-OOK waveform/signal despite the fact it occupies only ~5 MHz of bandwidth. Another example is that in certain instances, the resource dedication allows the OFDM transmitter to distribute the cyclic-prefix (CP) samples across the OOK symbols transmitted in any OFDM symbol, such as two OOK symbols per OFDM symbol in the high data rate case, but this approach might not be resource efficient.

In certain instances, a fixed subcarrier spacing may be used. However, it may be desirable (e.g., for 5G/NR/6G systems) to have much smaller subcarrier spacings, comparable to those used in this scenario, and different subcarrier spacings may be deployed in the same system. In certain instances, the CP length (i.e., number of samples associated with the CP) may be fixed, but the CP length of OFDM symbol in a cellular system (e.g., 5G/NR systems) may be variable as it may be different for different OFDM symbols.

Accordingly, to benefit from the ULP receiver and extend a WTRU's battery life, there is a need for transmitter architectures, signal generation, and channel design approaches that are suitable for ULP receivers taking into consideration the problems mentioned herein, and other related problems.

It is intended that the disclosures made herein address transmitter architectures, approaches, and methods to enable a generation of OOK modulated signals and design of low throughput physical channels that are suitable for a ULP receiver, including: 3GPP compatible CP-OFDM based transmitter architectures for the generation of ultra-low-power (ULP) signals (e.g., OOK modulated signals); 3GPP compatible DFT-s-OFDM based transmitter architectures for the generation of ULP signals (e.g., OOK modulated signals); 3GPP compatible transmitter architecture, with dedicated/standalone digital baseband (DBB) components, for the generation of ULP signals, (e.g., OOK modulated signals); Method for ULP signal (e.g., OOK modulated signals), transmission/generation accounting for cyclic-prefix (CP) length variation over OFDM symbols based on dynamic filler samples insertion, transmission of the OOK signals, and associated events; Method for ULP signal (e.g., OOK modulated signals), transmission/generation accounting for CP length variation over OFDM symbols based on dynamic adaptation of bit duration via dynamic guard interval insertion, transmission of the OOK signals, and associated events. It is intended that the disclosures made herein also address methods for reception, detection, and decoding of an OOK modulated sequence with redundant bits mitigation based on a ULP signal with dynamic filler samples insertion, and associated events; Method for reception, detection, and decoding of an OOK modulated sequence with dynamic bit duration based on a ULP signal with dynamic guard interval insertion, and associated events; Method for reception and decoding of an OOK modulated DCl/message with redundant bits removal based on a ULP signal with dynamic filler samples insertion, and associated events; and/or, Method for reception and decoding of an OOK modulated DCl/message with dynamic bit duration based on a ULP signal with dynamic guard interval insertion.

This disclosure contains references to an Ultra-Low-Power (ULP) signal, an ULP transmitter, an ULP receiver, and a main receiver or main radio. A radio includes both transmitter and receiver. An ULP signal may be considered to be a signal that is intended for an ULP receiver, which is transmitted by a device (e.g., base station (e.g., gNB), a user equipment (WTRU)), or other transmit unit and received by an ULP receiver. An ULP receiver may be considered to be a receiver separate from the main radio, and which has the ability to monitor wake-up signals and/or receive small payload signals with ultra-low power consumption. It may also have the ability to wake-up the main radio (e.g., receive and transmit part of the main radio). The main radio works for data transmission and reception, and it may be turned off or set to deep sleep, and it may be turned on by the ULP receiver.

An LP-PDCCH may be considered to be a low-power physical downlink control channel and is a newly defined physical channel that can carry control signals, such as Wake-Up Signals (WUS) and/or Downlink Control Information (DCI), with characteristics that are specific to ULP receivers. An LP-PDSCH may be considered to be a low-power physical downlink shared channel is also newly defined physical channel that can carry information signals, such as paging messages, with characteristics that are specific to ULP receivers.

In this invention, a ULP signal, of any design, may be used to address a ULP receiver in any of RRC idle, RRC inactive, and RRC connected states. In RRC idle/inactive, the ULP signal may be used to wake up the main radio of a WTRU which is in sleep mode. The low-power wake-up signal (LP-WUS) intended for a ULP receiver may be based on any of a sequence-based design and/or a DCI-based design where the DCI may be carried over a low-power physical control channel (LP-PDCCH) dedicated to ULP receivers or over a legacy/existing PDCCH. Alternatively, the wake-up indication may be a combination of a sequence-based and DCI-based LP-WUS and a paging message carried in a low-power physical data channel (LP-PDSCH) dedicated to ULP receivers or over a legacy/existing PDSCH. In some cases, there are architectures that are based on Waveform Generators, which are modules that can be used to store the frequency response of a specific single/multi-bit waveform(s).

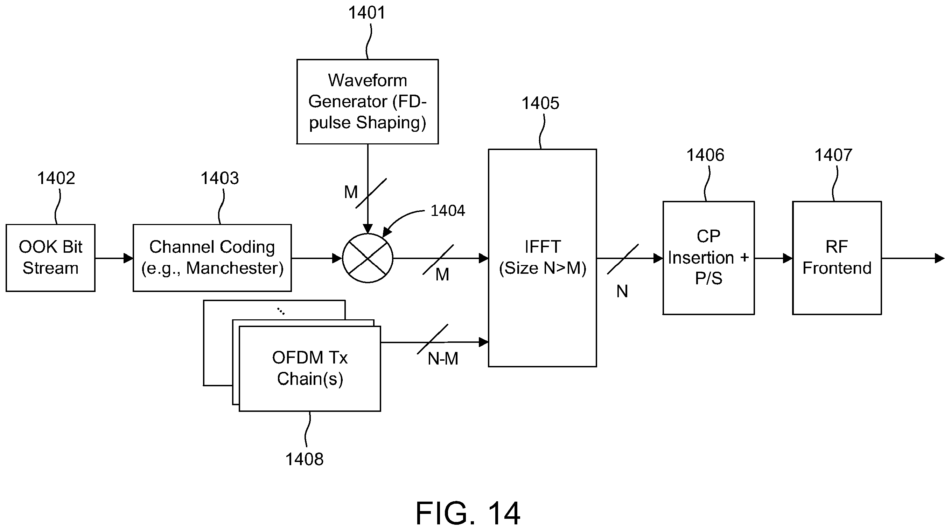

FIG. 14 illustrates an example of a transmitter architecture employing a single bit waveform generator 1401. As shown, the waveform generator 1401 is used to store the discrete frequency response of a single OOK bit (e.g., OOK modulated bit 1) of length *L*. The information bit stream (OOK bit stream) 1402 is channel encoded 1403 using, for example, Manchester encoding (e.g., [bit0 -> (1,0), bit1 -> (0,1)]) The output of the channel encoder is used to switch ON/OFF the output of the waveform generator (e.g., OOK waveform) using multiplication operation 1404. The resulting signal is processed by IFFT (size N) 1405 and CP bits 1406 are inserted before the signal is sent to the RF Frontend 1407. As shown in the figure, the OFDM transmit signal from the main transmit chain 1408 and the ULP signal intended for a ULP receiver 1402 are multiplexed and processed by the same IFFT component 1405.

The generated waveform for a single ULP receiver can be allocated a subset of the frequency-domain resources (e.g., *M* subcarriers) within the system bandwidth, (e.g., defined in number of subcarriers *N* ≥ *M*) whereas the rest of the resources (e.g., number of subcarriers *N - M*) can be shared by signals intended for other ULP 1402 and/or non-ULP (e.g., main) 1408 receivers.

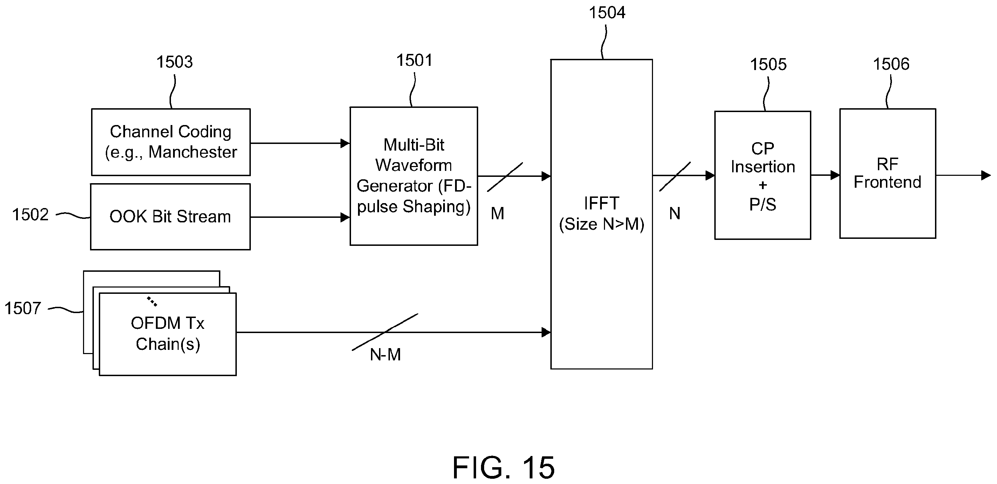

FIG. 15 illustrates an example of a transmitter architecture employing a multi-bit waveform generator 1501 based on supported channel coding rate(s). As shown, the waveform generator 1501 is used to store the frequency response of one or more multi-bit waveform(s) and the multi-bit size(s) is/are related to the supported channel coding ratio(s). For example, for the support of Manchester encoding with a coding ratio of 1/2, the waveform generator 1501 may need to store the frequency response of two two-bit waveforms (e.g., 2-bit OOK). The information bit stream 1502 along with the selected channel coding 1503 scheme are used to select the frequency response output for the waveform generator 1501. For example, for a number *K* of supported channel coding schemes, this architecture may need to store 2 × *K* discrete frequency responses of lengths ≥ *L*/*Rₖ* where *Rₖ* is the coding ratio of the *k^{th}* supported channel coding scheme and *k* ∈ {1, 2, ..., *K*}*.* The signal is processed by IFFT size N 1504 and CP bits 1505 are inserted before the signal is sent to the RF Frontend 1506. Similar to the receiver in FIG. 14, the OFDM transmit signal intended for non-ULP (main) receiver(s) (i.e., main transmit chain) 1507 and the ULP signal intended for ULP receiver(s) are multiplexed and processed by the same IFFT component 1504.

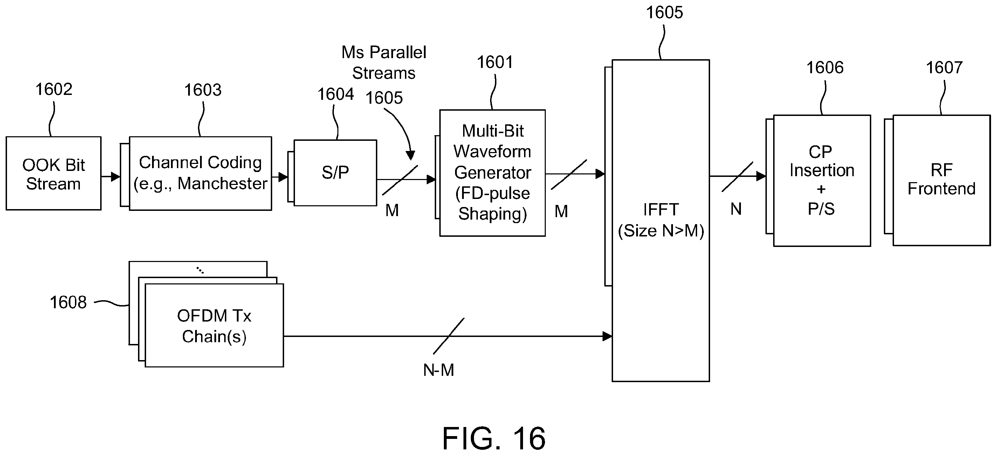

FIG. 16 illustrates an example of a transmitter architecture employing a multi-bit waveform generator based on coded bit stream parallelization. As shown, the waveform generator 1601 is used to store the frequency response of one or more multi-bit waveform(s) (e.g., multi-bit OOK). The multi-bit size(s) is/are dependent on the supported number of streams *Mₛ* 1605 at the output of the first serial-to-parallel 1604 module. In this architecture, the OOK bit stream 1602 is encoded by the channel coding module 1603 and the coded bit stream is converted to *Mₛ* parallel streams 1605 by a Serial to Parallel (S/P) converter 1604. The parallel streams are then used to select/determine the discrete frequency response output for the waveform generator 1601. This architecture may need to store 2*^{M^{s}}* discrete frequency responses of lengths ≥ *LMₛ.* The resulting signal is processed by IFFT (size N) 1605 and CP bits 1606 are inserted before the signal is sent to the RF Frontend 1607. Similar to the receivers in FIG. 14 and FIG. 15, the OFDM transmit signal from main transmit chain 1608 and the ULP signal are multiplexed and processed by the same IFFT component 1605.

In the exemplary transmitter architectures shown in FIG. 14, FIG. 15, and/or FIG. 16, the frequency domain multiplexing of signals can be considered using a single IFFT module for signals intended for other ULP receivers and/or non-ULP receivers (i.e., main receivers)., which may reduce the transmitter implementation cost overhead. In this case, the Cyclic-Prefix (CP) insertion in time-domain after the IFFT operation will depend on the multiplexed signals for the one or more ULP and/or main receivers.

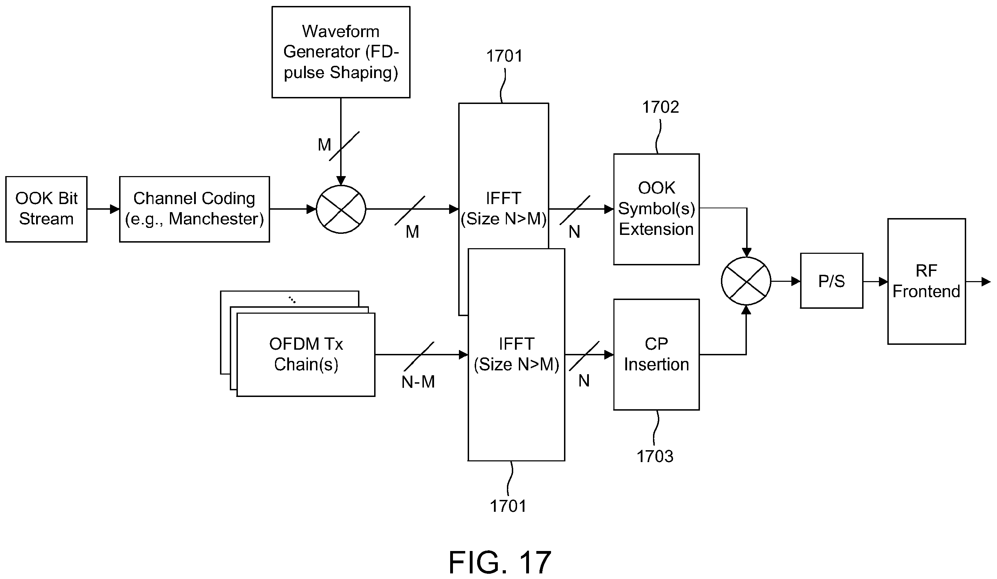

FIG. 17 illustrates an example transmitter architecture employing a single bit waveform generator and dedicated IFFT/symbol extension modules.

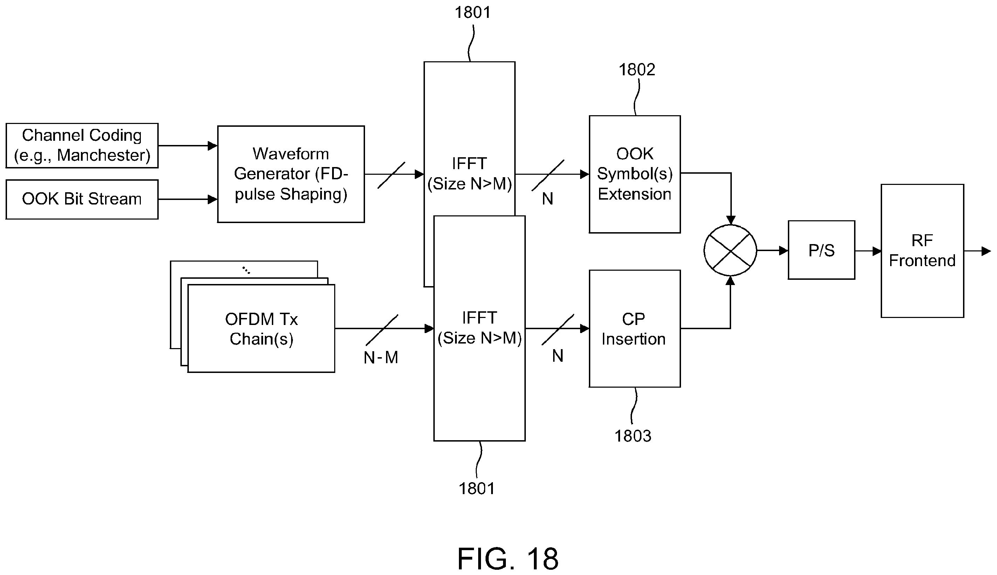

FIG. 18 illustrates an example of a transmitter architecture employing a multi-bit waveform generator based on supported channel coding rate(s) and dedicates IFFT/symbol extension modules.

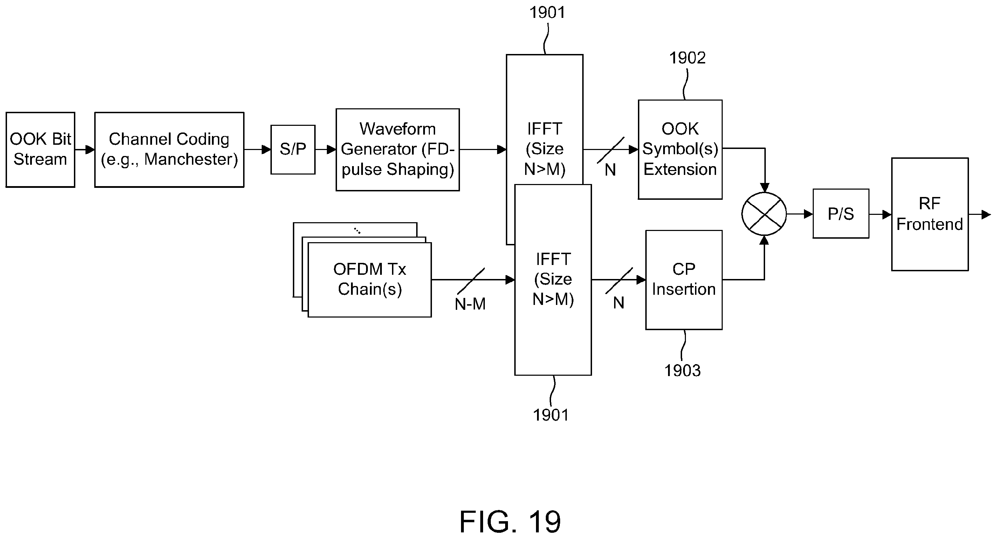

FIG. 19 illustrates an example of a transmitter architecture employing a multi-bit waveform generator based on coded bit stream parallelization and dedicated IFFT/symbol extension modules.

The CP dependency on multiplexed signals can be mitigated at the ULP receiver by bandpass filtering at the RF front-end and incorporating frequency domain gaps (e.g., guard bands) between ULP and non-ULP signals. This is a form of CP mitigation. However, the simple CP insertion module, which is used for both ULP and non-ULP signals, can be challenging when the waveform generator generates multiple bits per OFDM symbol. Therefore, the following transmitter architectures shown in FIG. 17, FIG. 18, and/or FIG. 19 may be considered.

The main difference between the transmitter architectures shown in FIG. 17, FIG. 18, and/or FIG. 19 and their respective alternatives in FIG. 14, FIG. 15, and/or FIG. 16 is related to CP mitigation approach. in FIG. 17, FIG. 18, and/or FIG. 19 there is a dedicated IFFT 1701, 1801, 1901 and OOK Symbol(s) Extension modules 1702, 1802, 1902 for each potentially multiplexed ULP signal (e.g., signal intended for a ULP receiver) and CP insertion 1703, 1803, 1903 modules for signals intended for non-ULP (main) receiver(s). The OOK Symbol(s) Extension module is corresponding to the CP insertion module and is meant to extend the duration of the transmitted OOK symbol(s) to match the duration of the OFDM symbol where the OOK symbol(s) are transmitted. The additional modules may add to the implementation cost, complexity, and power consumption and/or processing latency (e.g., as compared to the case where a single IFFT module is used in a sequential processing manner instead of parallel processing).

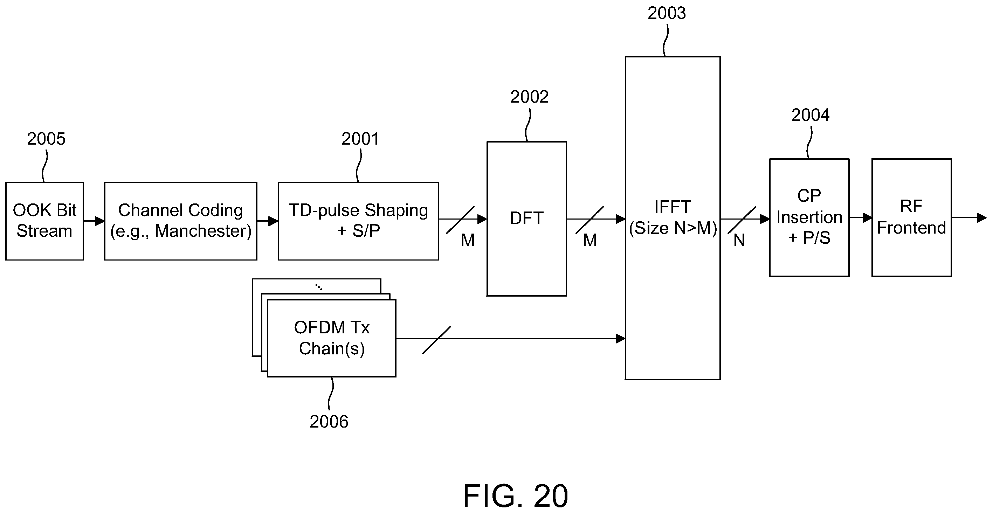

FIG. 20 illustrates an example of transmitter architecture employing TD Pulse Shaping and DFT modules to generate single and/or multi-bit waveforms per OFDM symbol. In some situations, there may be architectures that deploy time-domain (TD) pulse shaping and/or DFT modules to flexibly generate the frequency response of single and/or multi-bit waveforms instead of the limited stored set in Waveform Generators as discussed herein. Fig. 20 depicts an example of an architecture that uses a time-domain (TD) pulse shaping 2001 and a DFT module 2002 to generate the frequency response of the waveform. In this architecture a single IFFT 2003 and CP insertion 2004 modules are shared with all the frequency multiplexed signals intended for ULP 2005 and/or non-ULP (main) 2006 receiver(s). Therefore, this architecture lacks the flexibility to distribute the OFDM symbol's CP samples across OOK bits when multi-bits share the same OFDM symbol. This solution is similar to the solutions depicted in FIG. 14, FIG. 15, and FIG. 16. Note that the architecture in FIG. 20 can provide the CP sample distribution flexibility conditioned on dedicating the spectrum to one or more frequency multiplexed signals intended only for ULP receiver(s) and limiting signals to have the same transmission rate (e.g., bits/symbols per second).

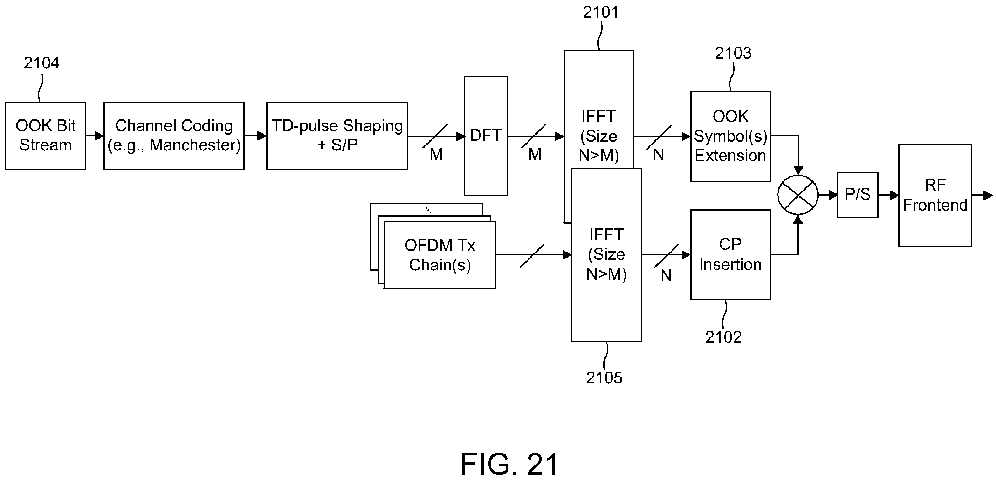

FIG. 21 illustrates an example of transmitter architecture employing TD Pulse Shaping, DFT, and dedicated IFFT/Symbol Extension modules to generate single and/or multi-bit waveforms per OFDM symbol. The architecture in FIG. 21 is equivalent to the ones shown in FIG. 17, FIG. 18, and FIG. 19. This architecture provides the flexibility of distributing the OFDM symbol's CP samples across multiple OOK bits/symbols by dedicating an IFFT 2101 and OOK symbols extension 2103 modules to the one or more frequency multiplexed signals intended for ULP receiver(s) 2104 only. The OFDM transmit chain has its own IFFT 2105 and CP insertion 2102.

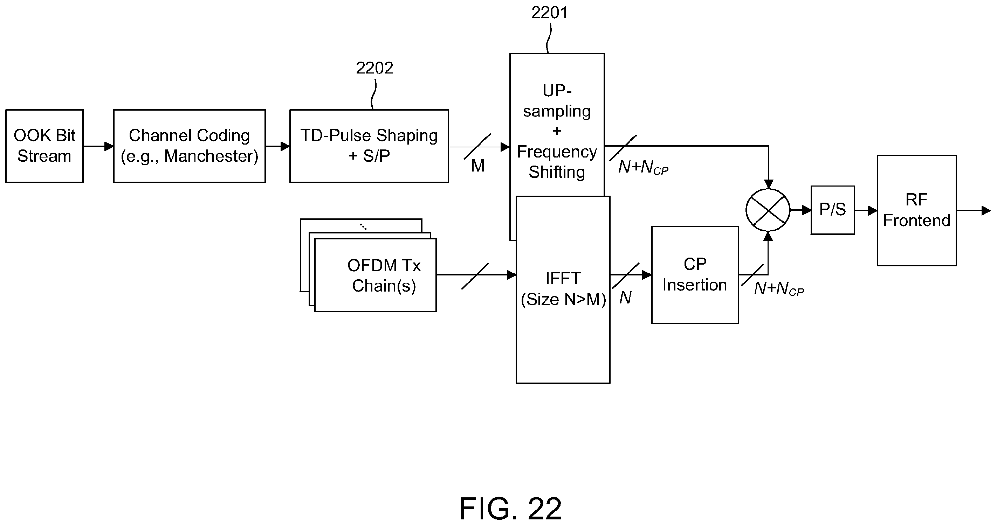

FIG. 22 illustrates an example of transmitter architecture employing TD Pulse Shaping, up-sampling, and frequency shifting modules to generate single and/or multi-bit waveforms per OFDM symbol. As an alternative to the DFT-based architecture shown in FIG. 21, FIG. 22 shows an example where the DFT, IFFT, and symbol extension modules may be replaced by an up-sampling and frequency shifting stages 2201 such that the output has the same number of samples as in an OFDM symbol (e.g., *N + N_{CP}* where *N_{CP}* is the number of CP samples). Depending on the ratio between the number of samples at the output to the number of samples at the input (e.g., (*N + N_{CP}*)/*M*) the up-sampling stage may actually comprise two substages, an up-sampling substage followed by a down-sampling substage to enable up-sampling by fractional factors. Alternatively, a truncation sub-stage can be used instead of the down-sampling substage. The serial-to-parallel (S/P) stage within the TD-pulse shaping + S/P module 2202 shown in FIG. 22 may not be mandatory, but it is used to illustrate the relationship between number of samples at the output with respect to the input, (*N + N_{CP}*)/*M.*

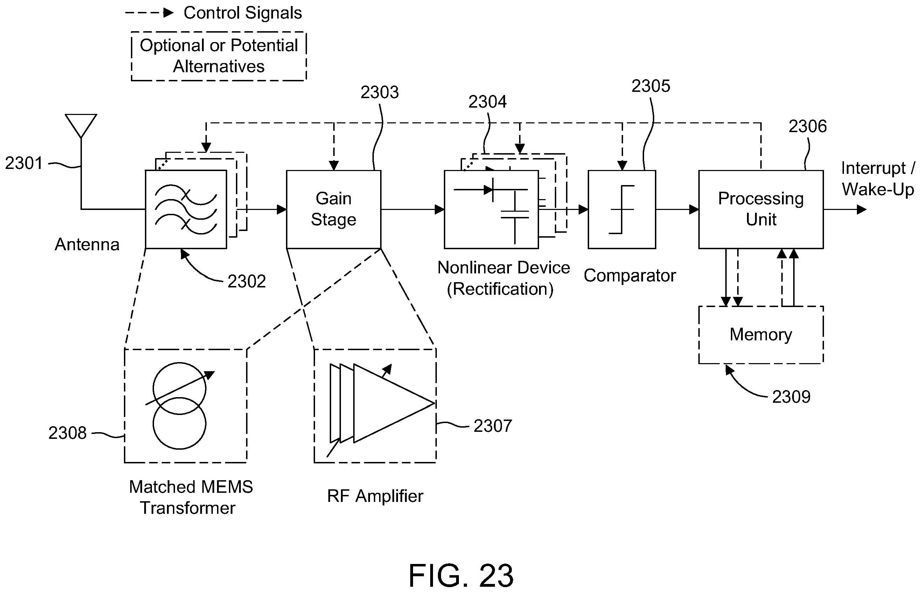

FIG. 23 illustrates an example of an ULP receiver architecture based on nonlinear device-based (e.g., rectification-based) down-conversion. This example of ULP receiver architecture with rectification-based down-conversion comprises one or more of the following (1) antenna element(s) 2301, (2) bandpass filter(s) 2302, (3) gain stage(s) 2303, (4) nonlinear device(s) 2304, (5) comparator 2305, and (6) processing unit 2306.

The antenna element(s) may be shared with the WTRU's main transceiver or dedicated and specially designed to improve the performance (e.g., sensitivity) of the ULP receiver. For example, the antenna element(s) may be designed to have a reduced impedance (e.g., 10 Ω) compared to traditionally considered impedance (e.g., 50 Ω). The ULP receiver may consider one or more bandpass filters 2302 centered around one or more carrier frequencies corresponding to one or more channels and/or sub-channels. The gain stage(s) 2303 may be implemented as one or more passive and/or active amplification stages 2307. The bandpass filtering and gain stage(s) may be implemented as one or more matched MEMS resonator(s)/transformer(s) 2308 providing the required (sub-)channel selectivity and passive voltage amplification gain. The one or more (sub-)channel(s) may be dynamically selected by the processing unit 2306.

The nonlinear device(s) 2304 may be used to provide the rectification functionality and convert the RF signal to a baseband signal. A multi-stage Dickson implementation may be considered where the transistors are biased in the sub-threshold region to improve the sensitivity of the ULP receiver. A ULP receiver may deploy one or more blocks of nonlinear device(s) which may be dynamically selected by the processing unit 2306 to accommodate one or more received data rate(s). A comparator stage 2305 can be considered after the rectification stage to compare the received signal against (e.g., a programmable or adaptive) reference signal threshold.

The processing unit 2306 is used to perform any required digital processing on the received signal. For example, the processing unit may be used to simply perform ultra-low power correlation against a known (e.g., programmable/configurable) wake-up sequence or signature. In another example, the processing unit is a microcontroller that may be used to perform functionalities beyond digital correlation (e.g., reading/detecting one or more commands in a received packet comprising any of one or more sequences and one or more strings of bits comprising one or more information elements). The processing unit may also interact with a memory 2309 that is dedicated to the ULP receiver or shared with the WTRU's main transceiver. Further, the processing unit may contain a local clock capable of supporting the highest data rate in the system. The output of the comparator might be sampled at a higher rate than the data rate to support timing recovery and synchronization (e.g., using cross correlation between a reference sequence and a received one or more repetitions of one or more sequences and/or their complements).

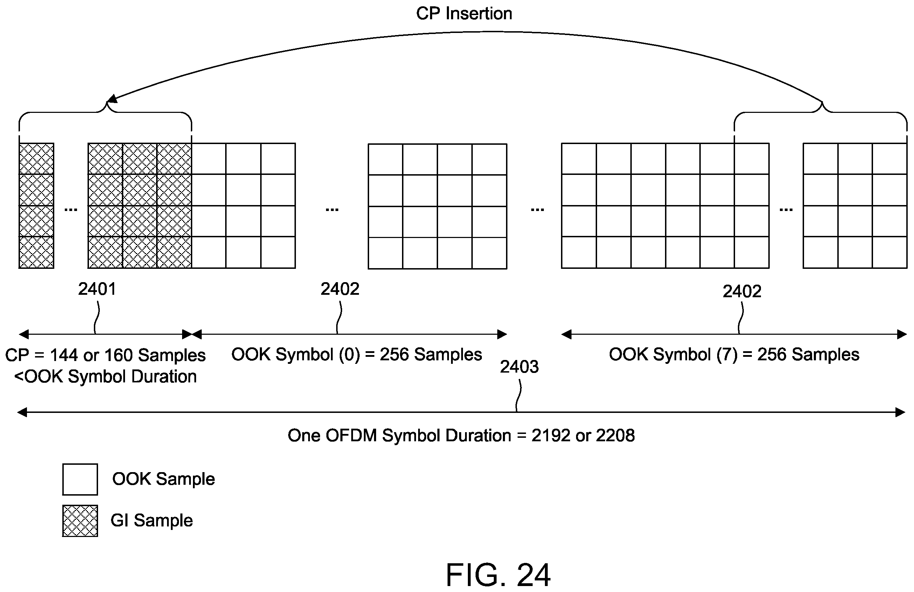

FIG. 24 illustrates a CP limitation on OOK signal design considering IFFT size of ***N*** = **2048,** subcarrier spacing **Δ*****f** =* **15*kHz,*** normal cyclic prefix configuration, and ***N_{bits}*** = **8** OOK bits/symbols per OFDM symbol.

A simple and straightforward CP insertion module, which is used for both ULP and non-ULP signals in example transmitter architectures FIG. 14, FIG. 15, and FIG. 16 may be inefficient when the waveform generator generates multiple bits per OFDM symbol. This can be illustrated in the example shown in FIG. 24, for the case of 15 kHz subcarrier spacing, IFFT/FFT size of 2048, and considering 8 OOK bits/symbols 2402 per OFDM symbol duration 2403, the CP samples 2401 result in 144 or 160 samples not utilized and do not help in inter-symbol interference (ISI) mitigation.

Further, to simplify the synchronization requirement at the ULP receiver, there may be a limitation on the OOK bit/symbol duration that is imposed by the CP duration, e.g., a limitation such that an OOK bit/symbol duration is equal to the OFDM symbol duration or the CP duration. However, we note that the CP duration itself changes depending on the OFDM symbol number within a slot (e.g., long OFDM symbols 0 and 7 versus short OFDM symbols) and limiting the OOK bit/symbol duration to be in range of the CP duration may be challenging from an ISI mitigation point of view.

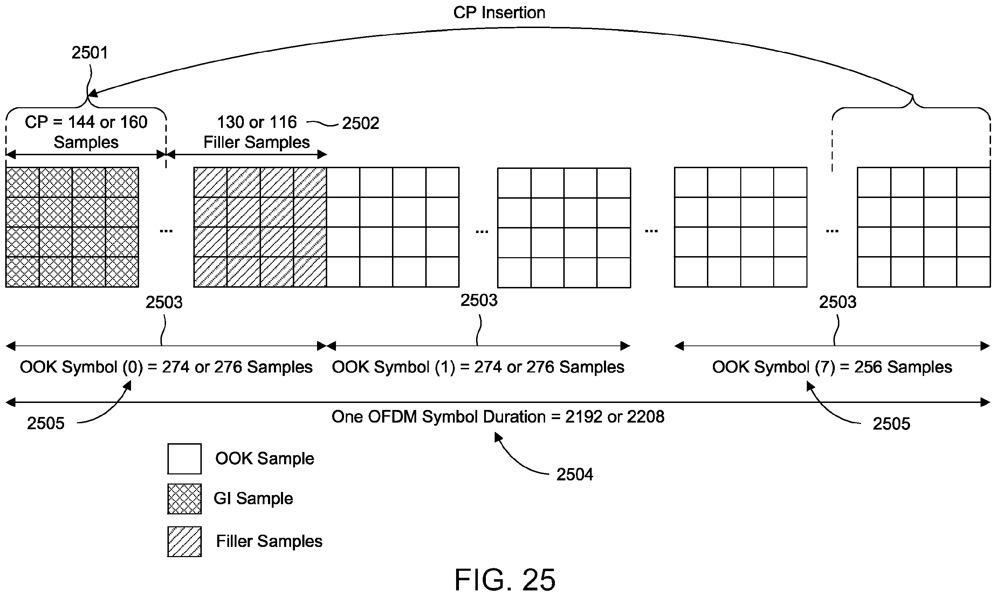

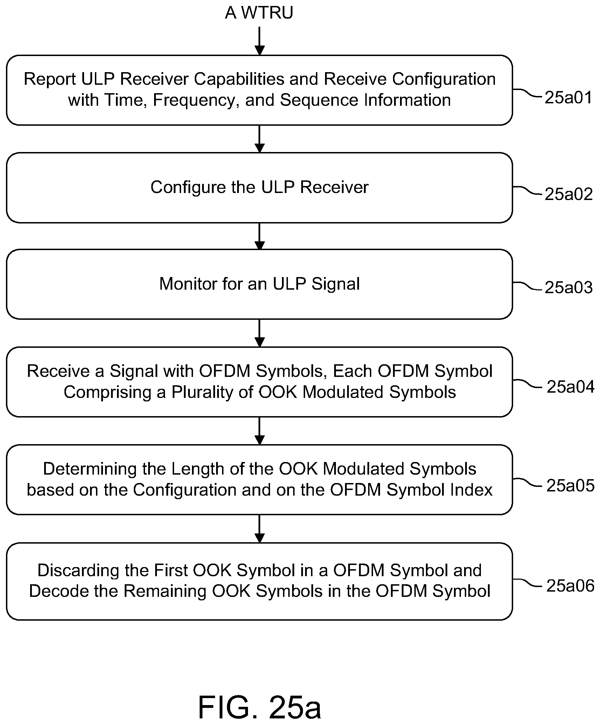

FIG. 25 illustrates an example of CP insertion 2501 employing filler samples 2502 of ***N̅_{d}*** = **[116, 130]*^{T}***based on OFDM symbol index/number and considering IFFT size **of N** = **2048,** subcarrier spacing **Δ*****f** = **15kHz,*** normal cyclic prefix configuration, and ***N_{bits}*** = **8** OOK bits/symbols per OFDM symbol.

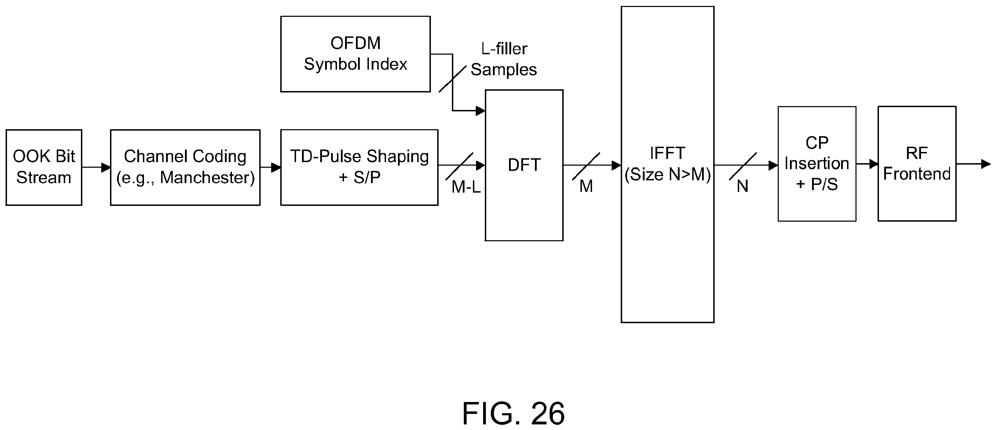

One approach for CP insertion to address potential shortcomings discussed with FIG. 24 is shown in the example of FIG. 25, where the OOK bit/symbol duration 2503 in case of multiple bits per OFDM symbol is selected such that it is approximately equivalent to the sum of the CP duration 2501 and a filler duration 2502, which is dependent on the OFDM symbol number 2504. In the example shown in FIG. 25 with the same system parameters as in FIG. 24, the OOK bit/symbol duration is increased, which may improve robustness against ISI. However, due to limited control over CP samples (e.g., when system bandwidth is shared with signals intended for non-ULP receivers), the number of information OOK bits/symbols per OFDM symbol 2505 reduces to 7 (instead of 8 as in the example of FIG. 24). The number of filler samples *N_{d}* are selected, based on the OFDM symbol number *l* (e.g., *N_{d}* = 116 ∀*l* ∈ {0, 7} and *N_{d}* = 130 ∀*l* ∉ {0, 7}), such that the sum *N_{CP} + N_{d}* = 274 *or* 276 depending on the OFDM symbol number, where *N_{CP}* is the number of CP bits. This may require the waveform generators of the architectures in FIG. 14, FIG. 15, and/or FIG. 16 to store waveforms that are dependent on the OFDM symbol number and the update of the architecture in FIG. 20 (as shown in FIG. 26) to account for filler samples insertion and adaptation of TD pulse shaping based on the OFDM symbol number.

In this example of FIG. 25, the first OOK symbol in the OFDM symbol will be discarded. AS illustrated in FIG. 25a, after the WTRU reports its capabilities 25a01 and configures the ULP receiver 25a02, the ULP receiver monitors for an ULP signal 25a03. The received signal is a sequence of OFDM symbols each OFDM symbol comprising OOK modulated symbols 25a04. The WTRU will determine the length of the OOK modulated symbols based on the configuration and OFDM symbol index 25a05. Finally the WTRU/ULP receiver discards the first OOK symbol in the OFDM symbol 25a06 and decodes the remaining OOK symbols.

FIG. 26 illustrates an example of transmitter architecture employing TD Pulse Shaping and DFT modules to generate single and/or multi-bit waveforms per OFDM symbol with filler samples/duration.

To obtain the number of samples *Nₒₒₖ* per OOK bit/symbol and number *N_{d}* of filler samples for a number *N_{bits}* of OOK bits/symbols per an OFDM symbol, the following problem may be formulated, considering a system with an IFFT/FFT size of *N:* $minimize \left‖{\overline{N}}_{CP}+{\overline{N}}_{d}-{\overline{N}}_{ook}\right‖$ (1) $\begin{matrix}Subject to \\ \left({N}_{bits}-1\right) {\overline{N}}_{ook} + {\overline{N}}_{d} = N ⋅ 1\end{matrix}$ (2) where ${\overline{N}}_{CP} = {\left[{N}_{CP , normal}^{long}, {N}_{CP , normal}^{short}\right]}^{T} , {\overline{N}}_{d} = {\left[{N}_{d}^{long}, {N}_{d}^{short}\right]}^{T}$, and ${\overline{N}}_{ook} = {\left[{N}_{ook}^{long}, {N}_{ook}^{short}\right]}^{T}$ are the vectors containing the number of samples associated with cyclic prefix, filler samples, and OOK bit/symbol and corresponding to the OFDM symbol of long and short durations, respectively. The number of CP samples associated with long and short OFDM symbol durations are defined as: ${N}_{CP , normal} = \left\{\begin{matrix}{N}_{CP , normal}^{long} = 144 + 16 ⋅ {2}^{μ} , & l = 0 or l = 7 ⋅ {2}^{μ} \\ {N}_{CP , normal}^{short} = 144 , & l \neq 0 or l \neq 7 ⋅ {2}^{μ}\end{matrix}\right.$ and *µ* E {0, 1, 2, ... } is a parameter that is dependent on the selected subcarrier spacing Δ*f =* 2*^{µ}* × 15*kHz.* The optimization problem in (1) aims at minimizing the gap between the OOK bit/symbol, for example, in terms of number of samples, and the combination of CP and filler samples/duration. The problem in (1) is constrained by the total number of samples being limited to *N + N_{CP,normal}* as defined in (2). Also, the problem reduced to a scalar optimization problem when OFDM symbols with extended cyclic prefix configuration are considered where *N_{CP,extended}* = 512.

The solution of *N̅_{d}* and *N̅ₒₒₖ* to the optimization problem in (1) - (2) can be obtained by solving (2) for *N̅_{d}* as ${\overline{N}}_{d} = N ⋅ 1 - \left({N}_{bits}-1\right) {\overline{N}}_{ook}$ (3)

Then, by substituting into (1), we obtain $minimize \left‖{\overline{N}}_{CP}+N⋅1-{N}_{bits}{\overline{N}}_{ook}\right‖$ (4)

The solution of *N̅ₒₒₖ* that optimizes (4), can then be obtained as ${\overline{N}}_{ook} = \frac{1}{{N}_{bits}} \left({\overline{N}}_{CP}+N⋅1\right)$ (5)

Hence, the optimal solution to (1) - (2) can be obtained using (3) and (5). In the optimization problem (1) - (2) the constraints on *N̅_{d}* and *N̅ₒₒₖ* to be integer are relaxed. Therefore, the optimal solution obtained by (3) and (5) may need to be rounded to the nearest integer. This solution, then, tries to harmonize the OOK bit/symbol duration across OFDM symbols of long and short durations as much as possible without the need to utilize dedicated IFFT and symbol extension modules. However, the ULP receiver may need to be able to (1) ignore signal transitions during the OOK bit/symbol duration corresponding to (e.g., comprising) the CP, and (2) (re-)synchronize its local (e.g., system) clock to account for the change in OOK bit/symbol duration across long and short OFDM symbols.

Finally, the effective transmission rate for the above-mentioned solution can be defined as ${R}_{eff , 1} = \frac{{N}_{bits} - 1}{1 + {N}_{CP , normal}^{avg}} Δ f$
where ${N}_{CP , normal}^{avg} = \frac{1}{14 ⋅ {2}^{μ - 1}} {N}_{CP , normal}^{long} + \frac{14 ⋅ {2}^{μ - 1} - 1}{14 ⋅ {2}^{μ - 1}} {N}_{CP , normal}^{short}$
and ${N}_{CP , normal}^{avg} = {N}_{CP , extended}$ when extended cyclic prefix is considered. This can be translated by a reduction in transmission rate by a ratio of 1/*N_{bits},* representing an overhead which may not be utilized to improve the performance of the communication link.

Alternative solutions are either option (1) to dedicate the system bandwidth to signals intended for ULP receivers of the same transmission rate at any point in time or option (2) to utilize a dedicated IFFT and OOK symbol extension modules as shown in the architectures of FIG. 17, FIG. 8, FIG. 19, and/or FIG. 21. In both approaches, the dedicated CP insertion (e.g., OOK symbol extension) module for signals intended for ULP signals can redistribute the CP samples across OOK bits/symbols per an OFDM symbol as if a CP has been appended to each individual OOK bit/symbol of number of samples *N̅_{CP}*/*N_{bits},* where *N̅ₒₒₖ* can be obtained as in (5) and the effective transmission rate in this case can be obtained as ${R}_{eff , 2} = \frac{{N}_{bits}}{1 + {N}_{CP , normal}^{avg}} Δ f .$

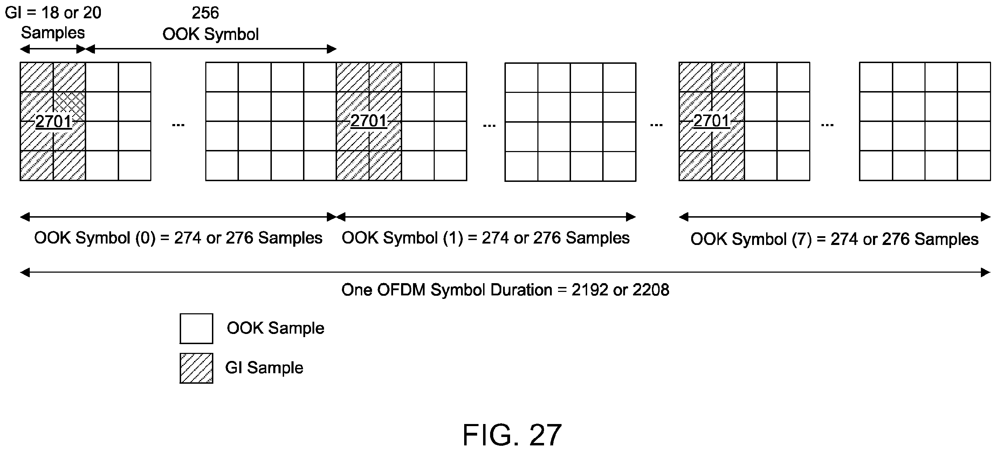

FIG. 27 illustrates an example of an approach employing dedicated spectrum (option 1) or modules to distribute CP samples uniformly as guard intervals ***G̅I̅** =* [**20, 18**]***^{T}*** across OOK bits/symbols based on OFDM symbol number and considering IFFT size of ***N*** = **2048,** subcarrier spacing **Δ*****f** =* **15*kHz,*** normal cyclic prefix configuration, and ***N_{bits}*** = **8** OOK bits/symbols per OFDM symbol (option 2).

As shown in FIG. 27, for an IFFT size of *N* = 2048, subcarrier spacing Δ*f =* 15*kHz* (i.e., *µ =* 0), and number of OOK bits/symbols per OFDM symbol *N_{bits} =* 8, the normal CP samples of *N̅_{CP} =* [160, 144]*^{T}* are distributed equally across *N_{bits}* resulting in guard intervals (Gls) 2701 of 20 or 18 samples, respectively. The Gls 2701 may comprise any of zero transmission intervals or cyclic prefix intervals where the cyclic prefix corresponds to the associated OOK bit/symbol.

Note that despite the improved effective transmission rate for FIG. 27, this might come at a spectral efficiency degradation cost when considering the option 1 depending on the considered scenario, for example, system bandwidth, number of multiplexed signals, and required bandwidth for the transmission of the signal(s) intended for ULP receiver(s).

Finally, we note that OOK bit/symbol duration can be maintained across OFDM symbols by considering extended CP configuration. Further, using any of the options associated with the second solution, along with extended CP configuration may provide more robustness against ISI, but for a lower number of OOK bits/symbols per OFDM symbol (e.g., compared to normal CP configuration).

In some cases, a ULP signal, of any design, may be used to address a ULP receiver in any of RRC idle, RRC inactive, and RRC connected states. In RRC idle or inactive, the ULP signal may be used to wake up the main radio of a WTRU which is in sleep mode. The low-power wake-up signal (LP-WUS) intended for an ULP receiver may be based on any of a sequence-based design and/or a DCI-based design where the DCI may be carried over a low-power physical control channel (LP-PDCCH) dedicated to ULP receivers or existing PDCCH. Alternatively, the wake-up signal indication may be a combination of a sequence-based/DCl-based LP-WUS and a paging message carried in a low-power physical data channel (LP-PDSCH) dedicated to ULP receivers or existing PDSCH.

The ULP receiver may support the reception of a limited set of sequences to support the operation of different functionalities including any of wake-up signaling (WUS), Paging Early Indication (PEI), system information (re-)acquisition, cell (re-)selection measurements, and/or resource scheduling. The limited set of sequences can be designed as Pseudo-random (PN) sequences (e.g., maximal length sequences), each of length *N_{seq},* that satisfy any one or more of the following: a minimum requirement on Hamming distance to minimize cross-correlation; a maximum requirement on miss-detection and/or false alarm rates; a maximum run length to limit the number of consecutive 0's and/or 1's in the sequence; a maximum sequence length ${N}_{seq}^{max}$ to comply with OFDM frame structure; an ULP receiver synchronization requirement; latency requirements based on supported data rates.

The increase of the Hamming distance, reduction of miss-detection, false alarm rates, and/or increase in size of the limited set of sequences may require the increase in the sequence length, which might be limited by requirements to comply with OFDM frame structure, ULP receiver synchronization performance, and/or latency requirements subject to the supported data rate.

Further, the number of sequences of the limited set of sequences that can be monitored simultaneously by the ULP receiver may be limited by requirements on WTRU's (e.g., ULP receiver) power consumption and design complexity. For example, the ULP receiver may be expected to receive one of a first sub-set of the limited set of sequences at a certain point in time to indicate one of a second sub-set of system information configurations. The ULP receiver may then be required to comprise a set of parallel correlators of size corresponding to the maximum size of any of the first sub-set or the second sub-set of the limited set of sequences. This requirement may then increase the ULP receiver's design complexity and power consumption.

The ULP receiver may reduce the number of required parallel correlators for the same number of supported sequences through the utilization of structured sequence design, such as a sequence comprising the repetition of one or more sub-sequences and/or one or more complements of the one or more sub-sequences. For example, a single correlator may be used to distinguish between two sequences (***s***₁, ***s***₂) through their structure, as the first sequence ***s***₁ = **[*Z, Z*]** is a concatenation of a sub-sequence ***Z*** and its repetition, and the second sequence ***s*₂** *=* [***Z**, **Z̅***] is a concatenation of the sub-sequence ***Z*** and its complement ***Z̅***. The correlator may then need to correlate against (e.g., distinguish or detect) the sub-sequence ***Z*** where the length of the sub-sequence ***Z*** (e.g., and its complement ***Z̅***) is half the length of any of the sequences ***s***₁ and ***s***₂. The detector may need then to differentiate between the two sequences through the detection of either two positive peaks or a positive peak followed by a negative peak where the separation between the peaks is equivalent to the sub-sequence length.

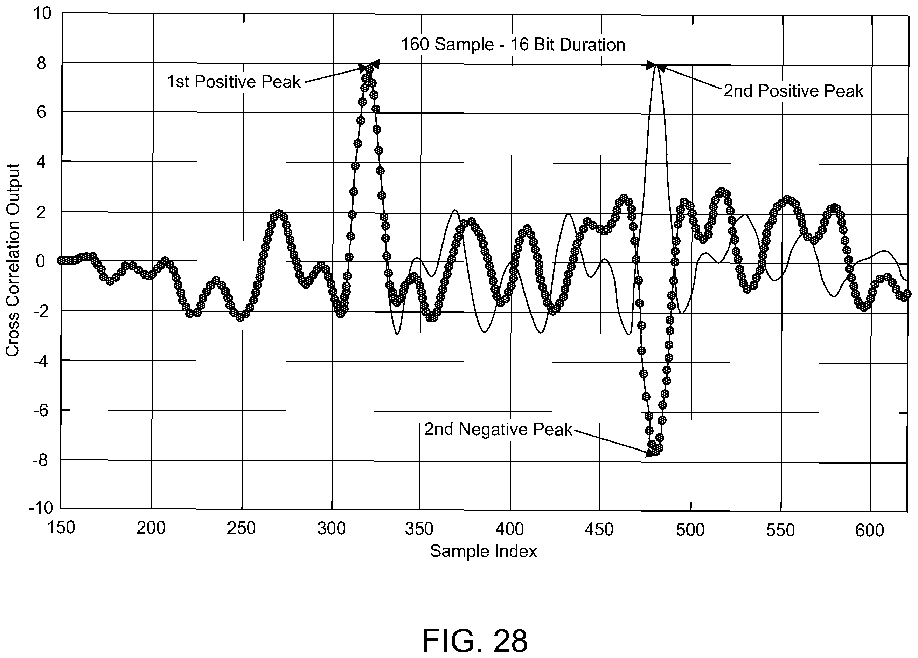

FIG. 28 illustrates an example of the cross-correlation output between ***Ẑ*** and the two sequences ***s***₁ = [***Z**,* **Z**] and ***s***₂ *=* **[*Z, Z̅***], for an example sub-sequence ***Z*** and its complement ***Z̅*** which are selected based on a maximal length sequence, using a polynomial of degree *r* = 16, to have an equal number of 1's and 0's. The considered example sub-sequence ***Z*** and its complement ***Z̅*** are: $\begin{matrix}Z = \left[1, 0, 0, 1, 0, 1, 1, 1, 1, 0, 0, 1, 1, 0, 0, 0\right] \to \left(6\right) \\ \overline{Z} = \left[0, 1, 1, 0, 1, 0, 0, 0, 0, 1, 1, 0, 0, 1, 1, 1\right]\end{matrix}$

The cross-correlation result is shown using an oversampling ratio of 10, therefore, a spacing of 160 samples between peaks correspond to the sub-sequence length of 16 bits. For purpose of cross-correlation, the reference sequence ***Ẑ*** is a modified version of ***Z*** to have a zero mean, for example: $\hat{Z} = \left[1, -1, -1, 1, -1, 1, 1, 1, 1, -1, -1, 1, 1, -1, -1, -1\right]$

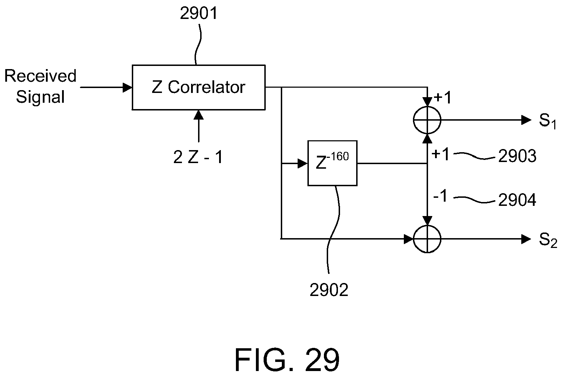

FIG. 29 illustrates an example of a receiver detector of sequences ***s*₁** and ***s*₂** using a single correlator 2901 and a single delay unit 2902. As shown, the received signal is correlated 2901 against the know subsequence (e.g., 2***Z*** - 1) and the output is aggregated with a delayed version 2902. A corresponding scaling +1 2903 is applied to the delayed version to detect the sequence ***s***₁ whereas -1 2904 is applied to the delayed version to detect the sequence ***s*₂**.

As opposed to sequence based ULP signals, DCI and/or message based ULP signals may be used to carry (e.g., convey) more information at a lower resource utilization. Further, to improve decoding probability and/or reduce false alarm (e.g., by discarding errored messages/frames), forward error correction and/or error detection schemes may be considered. However, we note that incorporation of error correcting codes (e.g., channel coding) for forward error correction may incur undesired receiver complexity and a corresponding increase in power consumption. Additionally, to limit the resource utilization overhead associated with ULP signals and/or to enable on-demand signaling, synchronization sequences may need to be incorporated with ULP signals only as they are transmitted. Therefore, a ULP signal may comprise any of a synchronizing sequence, payload, and/or a frame check sequence (FCS, e.g., in the form of a cyclic redundancy check (CRC) sequence) for ULP signal's error detection.

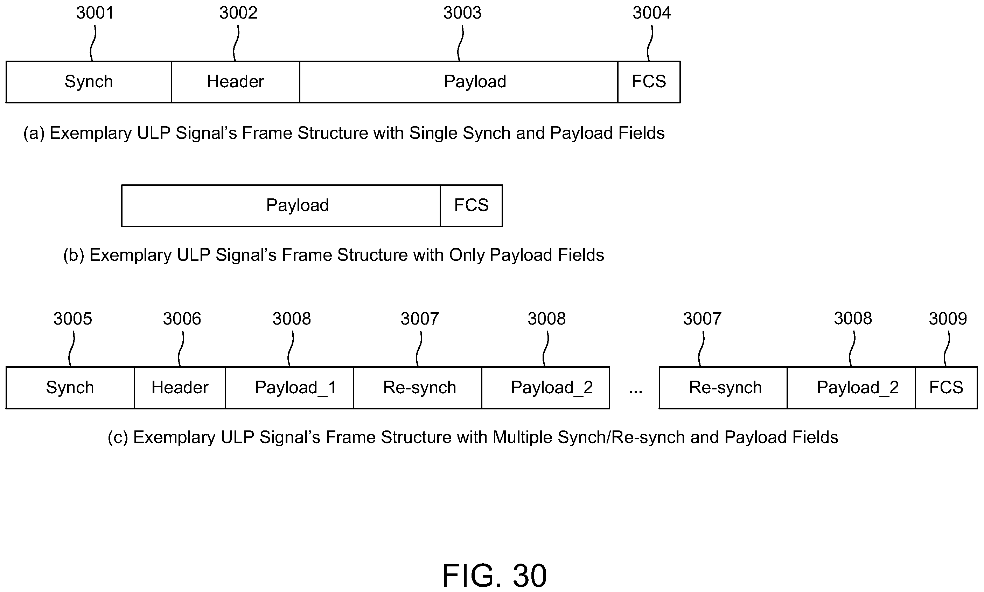

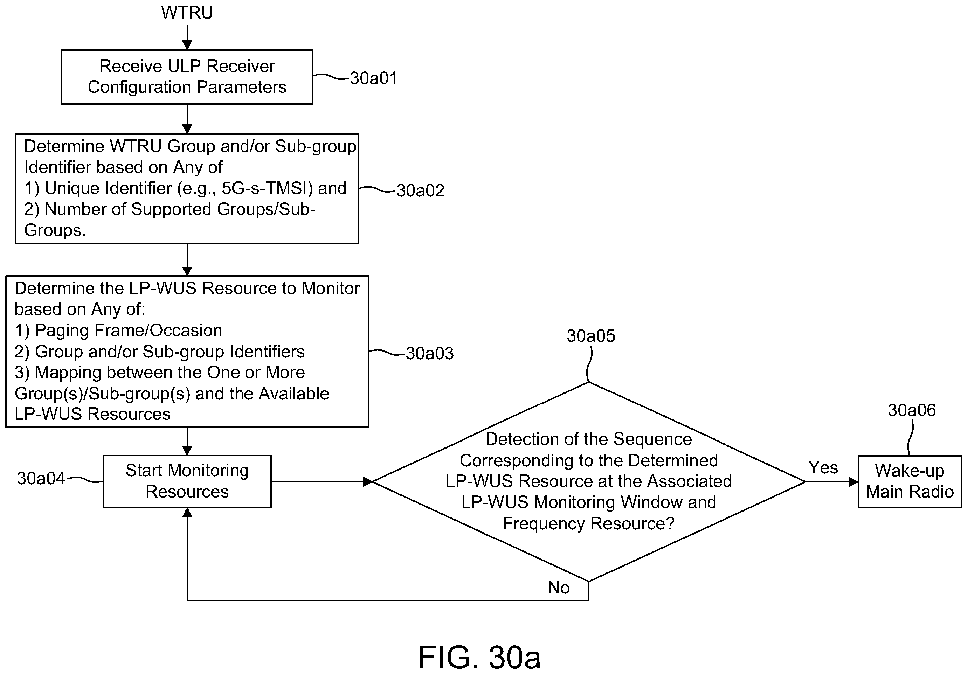

FIG. 30 illustrates an example of ULP signal frame structures. The example of FIG. 30 alternative (a) comprises a synchronization field 3001, a header field 3002, a payload field 3003, and an FCS field 3004. The synchronization field may contain one or more sequences and may be utilized to provide timing and/or frequency synchronization to the ULP receiver. The synchronization field may also be utilized to provide some information about the structure of the following fields (e.g., data rate of the payload field). The header field may be optional and not present, for example, for a fixed signal configuration in terms of one or more factors, such as payload size, payload content, data rate, FCS length, etc. The header may also be used to provide some synchronization assistance, for example, via an indication of timing at the source/transmitting node. Further, the header may be an additional sequence that may be mapped to one of one or more pre-configurations at the ULP receiver that provide information about the data rate and/or length/size of the payload field. The header and payload fields may span one or more OFDM symbols, slots, or subframes. Further, the payload field may span one or more frequency channels (e.g., one or more sets of subcarriers) where the sets of subcarriers may be known a priori at the ULP receiver or signaled via a preceding field (e.g., in the Synch or header fields as a sequence or control bits).

An alternative frame structure example is shown in FIG. 30 alternative (b) where the synchronization field is removed due to some reason, such as periodic transmission of a synchronization signal/sequence by a device e.g., a base station (BS) or other transmitting node. In this alternative, the header is also absent (e.g., due to fixed configuration of the ULP signal which is known a priori at the ULP receiver). The example of FIG. 30 alternative (c) comprises a synchronization field 3005, a header field 3006, one or more re-synchronization fields 3007, one or more payload fields 3008, and an FCS field 3009. The one or more re-synchronization fields 3007 may be used to re-tune the ULP receiver when the payload size is long and/or to improve the successful decoding probability of the overall payload 3008. The one or more re-synchronization sequence(s) 3007 may be the same or different than the synchronization sequence 3005. The one or more re-synchronization sequence(s) may also assist in mitigating the impact of the varying OOK symbol duration across OFDM symbols due to the difference in CP length.

In an embodiment, a ULP receiver operation may be enabled in the current/last known serving cell before transition to RRC idle/inactive state and, therefore, the ULP receiver configuration may be received as part of an RRC message (e.g., *RRCReconfiguration* and/or *RRCRelease* with/without Suspend Configuration). This method will set the configuration, which will remain active until it is reconfigured. The ULP receiver may then be configured to perform/support any one or more actions/functions.

For example, there may be actions/function applicable to all RRC states, such as: switching and/or indication of switching to the main receiver operation based on any of measurements (e.g., in RRC idle or inactive state) and network request (e.g., in any RRC state); and/or, monitoring and/or reception of short control or data messages.

For example, there may be actions/function applicable to RRC idle/inactive state(s), such as: monitoring for CN/RAN paging indication(s): reception of paging message(s); performing idle/inactive measurements; and/or, system information acquisition update.

For example, there may be actions/function applicable to RRC Connected State, such as: monitoring for control channel associated with shared data channel to determine scheduling information; and/or, performing neighboring cell measurements.

In an embodiment, the ULP receiver operation may not be restricted to the last known serving cell before transition to RRC idle/inactive state and, therefore, the ULP receiver configuration may be received as part of system information as it would be cell-specific (or it may change when WTRU camps on a new cell). The ULP receiver may then be configured to perform/support any one or more of the following actions/functions (e.g., in RRC idle/inactive state) in addition to the actions/functions defined herein (e.g., with regard to another embodiment, example, or approach): acquisition and/or update of system information; and/or, performing neighboring cell measurements and cell (re-)selection.

In an embodiment, a WTRU equipped with a ULP receiver may be configured to operate the ULP receiver only in the current serving cell, such as a last known serving cell after transition to RRC idle/inactive state. The WTRU may first receive ULP receiver and LP-WUS configuration (e.g., in an *RRCReconfiguration* message including timing information, frequency resource information, and signal characterization information. The WTRU may then transition to another state (e.g., RRC idle or inactive state) and initiate monitoring of some communication (e.g., paging messages) in the last known cell. The WTRU may then detect a LP-WUS using the ULP receiver according to the received ULP receiver and LP-WUS configuration. Next, the ULP receiver wakes up the main radio of the WTRU to complete the related process (e.g., the paging procedure) and initiate communication with the network.

The ULP receiver configuration, which may be provided to the WTRU in any of an RRC or a system information message(s), is received and processed by the WTRU. The ULP receiver configuration information may contain one or more parameters. For example, there may be timing information/parameters of LP-WUS to determine timing of LP-WUS to any of an always-on operation, a DRX cycle, a paging frame, a paging occasion, one or more time offset with respect to a paging occasion, a duration of monitoring for ULP signals, (i.e., LP-WUS monitoring window, number of monitoring windows, number of supported groups and sub-groups, number of supported sequences, and/or a mapping between the one or more group(s)/sub-group(s) and the available LP-WUS resources.

For example, there may be frequency resource information/parameters to determine any of a center frequency, number of carriers, bandwidth of LP-WUS in terms of any of absolute frequency values, subcarrier index(-ices), resource block index(-ices), and an index to a set of pre-configurations.

For example, there may be signal characteristics information/parameters of LP-WUS including any one or more of the following: Sequence structure of LP-WUS including indication(s) of a sequence length, a sequence duration, sequence type, indication of the concatenation of one or more sub-sequences to construct a sequence, (sub-)sequence seed(s), cyclic shift(s), and/or transmission rate; Assignment of sequence(s) and/or mapping between common/assigned sequence(s) and supported actions/functions; Indication of the structure of the frame carrying any of a DCI, paging message, short message, and system information, where the structure may comprise any of a preamble, a header, one or more payload(s), one or more reference signal(s), and an FCS; Indication of supported transmission data rate(s) on LP-WUS; Reference signal information indicating the length and duration of one or more sequence(s) to be used for any of synchronization, re-synchronization, AGC, and bit threshold adaptation; Modulation scheme and characteristics including any of an indication of OOK modulation, OOK bit duration(s), and/or indication of CP mitigation requirements; and/or, frame check sequence information including indication of CRC and a corresponding number of bits

FIG. 30a illustrates an example of a process of monitoring resources and waking-up the main radio upon detection of a sequence. The receiver is configured 30a01, where the parameters may be received by the network or have been pre-configured in the device. As shown in FIG. 30a, the WTRU may then determine its group and/or sub-group identifier based on any of a unique identifier (e.g., 5G-s-TMSI) and the number of supported groups/sub-groups 30a02. The WTRU may then determine the LP-WUS resource to monitor based on any of determined paging frame/occasion (e.g., based on the DRX cycle, WTRU identifier, and number of paging frames/instances in a DRX cycle), determined group and/or sub-group identifiers, and/or mapping between the one or more group(s)/sub-group(s) and the available LP-WUS resources 30a03. The WTRU may start monitoring the resource(s) 30a04, 30a05 and wake-up the main radio 30a06 upon detection (e.g., using the ULP receiver) of the sequence corresponding to the determined LP-WUS resource at the associated LP-WUS monitoring window and frequency resource.

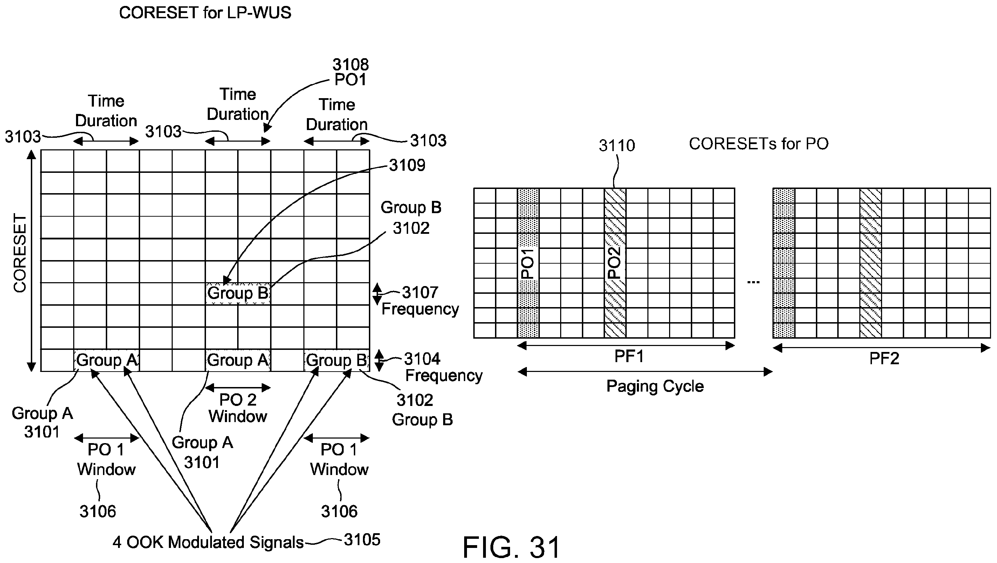

FIG. 31 illustrates an example configuration of LP-WUS resources consisting of two groups per paging occasion in a paging frame: group A 3101 and group B 3102. Each group is associated with a configured time duration 3103 and frequency resource 3104, 3107, and one or more OOK modulated sequences 3105 corresponding to the number of configured sub-groups per paging occasion. For instance, the WTRU determines the LP-WUS resource associated with the determined paging occasion (PO): PO1 3106 comprising two groups (e.g., group A 3101 and group B 3102), with two monitoring windows 3106, a single frequency resource (e.g., the first RB in a CORESET) 3104, and four different OOK modulated sequences 3106.

In this example in FIG. 31 the resources associated with the Paging Occasion may be transmitted at any of the time/frequency resources associated with the groups and monitoring windows. For PO1, for example, at any of the two monitoring windows. The WTRU may then determine the first monitoring window based on the determined group identifier (e.g., group A) and the first of the four OOK modulated sequences based on the determined sub-group identifier. In another example, the WTRU may determine the LP-WUS resource associated with the determined paging occasion (PO) (e.g., PO2 in a first paging frame (PF-1) 3110) comprising two groups (e.g., group A 3101 and group B 3102), a single monitoring window 3108, two frequency resources (e.g., the first and fourth RBs in the CORESET) 3104, 3107, and two different OOK modulated sequences, which may be transmitted at any time/frequency resource (e.g., for PO2 in PF 1, at any of the two determined RBs). The WTRU may then select the second frequency resource (e.g., RB 4) 3107 based on the determined group identifier (e.g., group B) and the first of the two OOK modulated sequences based on the determined sub-group identifier.

In an example, the WTRU receives ULP receiver configuration including indication of an always-on operation, an indication of LP-WUS monitoring, an indication of sequence-based signaling, and/or LP-WUS resource configuration. The LP-WUS resource configuration may include one or more time offset(s) to one or more sub-group indication windows with respect to time of detection of a group indication, a time offset to paging frame(s)/occasion(s) with respect to time of detection of a (sub-)group indication, a sub-group indication monitoring window, one or more frequency resources (e.g., subcarrier index/indices where each resource may be associated with a PO in an indicated PF), number of frequency elements (e.g., bandwidth or number of subcarriers) associated with each frequency resource, number of supported groups and sub-groups, number of supported sequences, and mapping between the one or more group(s)/sub-group(s) and the available LP-WUS resources.

The WTRU may then determine its group and/or sub-group identifier based on any of a unique identifier (e.g., 5G-s-TMSI) and number of supported groups/sub-groups. The WTRU may then determine the LP-WUS frequency resource to monitor based on a determined potential paging occasion/frame (e.g., based on the DRX cycle, WTRU identifier, and potential/average number of paging frames/instances in (e.g., any *N_{CF}* consecutive frames). The WTRU may then determine a LP-WUS group sequence to monitor based on the determined group identifier and the mapping between the groups and LP-WUS resource (e.g., sequences). The WTRU may also determine a LP-WUS sub-group monitoring window and a sub-group sequence to monitor based on the determined sub-group identifier and the mapping between the sub-groups and LP-WUS resource (e.g., monitoring windows and sequences) where the LP-WUS sequences may be reused across the monitoring windows.

Subsequently, on a condition that the monitored LP-WUS group sequence is detected using the ULP receiver, the WTRU monitors for a LP-WUS sub-group sequence in sub-group specific monitoring window based on configuration of sub-groups. The WTRU will further (or alternatively) wake-up the main radio upon detection (e.g., using the ULP receiver) of the any of group and sub-group sequence(s) to receive a paging DCI in a paging occasion at a paging frame determined by a preconfigured or signaled offset from the time when the (sub-)group LP-WUS sequence is detected.

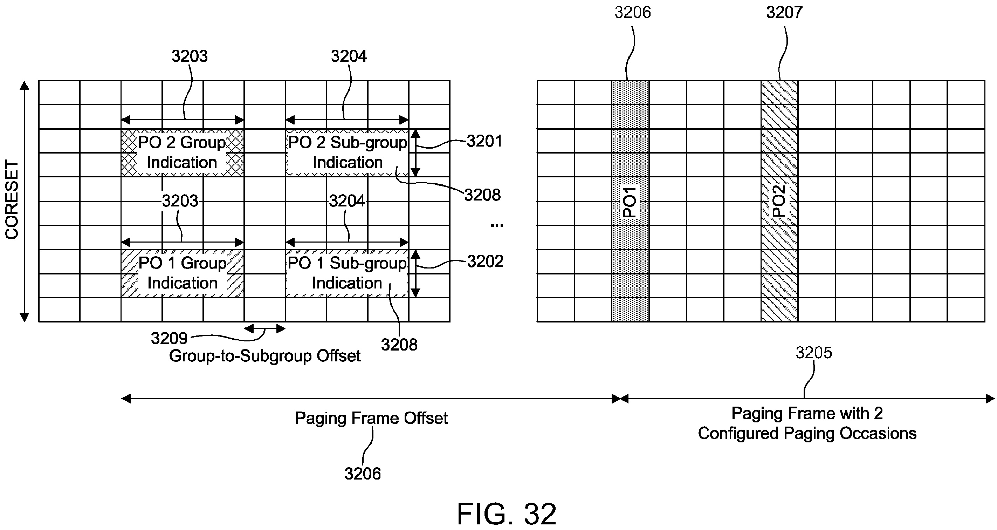

FIG. 32 illustrates an example configuration of always-on operation for monitoring of LP-WUS resources comprising two frequency resources 3201, 3202 (corresponding to two POs) and two time-resources/windows 3203, 3204 (each associated with one or more OOK modulated sequences) for indication of groups and sub-groups per a PO.

As shown, in this example there is an LP-WUS resource configuration that addresses the always-on operation of the ULP receiver and the corresponding paging frame. The paging frame 3205 comprises two POs 3206, 3207 and the LP-WUS resource configuration in this example comprises two frequency resources 3201, 3202, each is associated with a PO in the associated PF. One or more frequency resources may be available and may be associated with additional PFs in any *N_{CF}* consecutive frames and the WTRU determines the frequency resources based on a preconfigured or signaled mapping between potential PFs and the frequency resources. The LP-WUS resource configuration in this example may further comprise a single sub-group monitoring window 3208 following any detected group indication by a, for example, group-to-sub-group offset 3209. The separation in time domain, between the time a group indication is detected and the associated PF, is determined by a preconfigured or signaled paging frame offset 3206.

In one example, the WTRU may receive ULP receiver configuration including indication of an always-on operation, an indication of LP-WUS monitoring, an indication of combination of sequence-based and DCI-based signaling, and/or LP-WUS resource configuration. The LP-WUS resource configuration may include a time offset to a DCI-based sub-group indication with respect to time of detection of a sequence-based group indication, a time offset to paging frame(s)/occasion(s) with respect to time of detection of a (sub-)group indication, a frame structure for the DCI-based sub-group indication, one or more frequency resources (e.g., subcarrier index/indices where each resource may be associated with a PO in an indicated PF), number of frequency elements (e.g., bandwidth or number of subcarriers) associated with each frequency resource, number of supported groups and sub-groups, number of supported sequences, and/or mapping between the one or more group(s) and the available LP-WUS resources.

In another example, the sequence-based group indication may be used for the synchronization of the ULP receiver and therefore the frame structure of the DCI-based sub-group indication may comprise only a payload field and an FCS field. Alternatively, if the group-to-subgroup offset is larger than a threshold, the frame structure of the DCI-based sub-group indication may still include a synchronization field at the beginning of the frame. In both cases, the size, modulation, and transmission rate of the payload is assumed to be known a-priori at the ULP receiver. Otherwise, a header may also be included before the payload to provide indication(s) of these parameters.

In an example, the ULP receiver may monitor a first sequence associated with PO 1 Group indication and corresponding to a first group (e.g., Group A) in one or more groups. The ULP receiver, upon detection of the monitored first sequence, may initiate decoding of a DCI-based sub-group indication at the end of a configured group-to-sub-group offset. The ULP receiver may then determine a bit 1, from one or more bits in the payload corresponding to the one or more configured sub-groups per PO, indicating that its sub-group is being addressed in a PO. The WTRU may, then, wake-up the main radio to receive the paging DCI in a PO at a PF starting at the end of a configured paging frame offset. This example may correspond to the configuration shown in FIG. 32.

In an embodiment, a WTRU equipped with a ULP receiver may be configured to detect an OOK modulated sequence. The WTRU may report its ULP receiver capability and receive ULP receiver configuration including timing, frequency, and/or sequence structure information for one or more sequence(s). The WTRU may then determine one or more bit duration(s) (e.g., number of samples per bit) for each of the one or more sequences based on the sequence duration, number of bits per sequence, and/or timing information (e.g., OFDM symbols over which the sequence is transmitted). The WTRU may set the RF front-end to a configured carrier frequency and bandwidth (e.g., based on received frequency information) and configure a rectification circuit for down-conversion based on sequence transmission rate. The WTRU may configure the ULP receiver's correlators to detect one or more (sub-)sequences based on the received sequence structure, a received indication of CP mitigation, and/or determined bit durations. The WTRU may configure the processing unit to differentiate between the one or more sequences based on a combination of positive and/or negative detected peaks (e.g., separated by a duration equivalent to the sub-sequence(s) length(s)) at the output of the correlators. The WTRU may configure the ULP receiver to send an interrupt to the main transceiver upon detection of any of the one or more configured sequences.

The ULP receiver capability may include any of a number of RF front-end band-pass filter and a corresponding carrier frequency and bandwidth, an indication of one or more configurable RF front-end bandpass filter(s) and corresponding range of carrier frequency and bandwidth, an indication of passive and/or active gain stage and corresponding gain(s), a supported number of correlators, an indication of supported sequence structures, and an indication of sequence-based and/or DCI-based detection of OOK modulated signals.

In an example, a sequence of the one or more sequences may comprise a first set of sub-sequences, wherein a first subset of the first set is determined to have a long bit duration (e.g., their transmission time corresponds to transmission on a long OFDM symbol, such as an OFDM symbol with long normal CP duration) and a second subset of the first set is determined to have a short bit duration (e.g., their transmission time corresponds to transmission on a short OFDM symbol, such as an OFDM symbol with short normal CP duration). The first and second subsets may be determined based on any of a sequence duration, a number of sub-sequences per sequence, a number of bits per sub-sequence, and/or an index of an OFDM symbol indicating the beginning of sequence transmission.

A sequence of the one or more sequences may comprise a second set of bits, wherein a first subset of the second set is determined to have a long bit duration (e.g., their transmission time corresponds to transmission on a long OFDM symbol, such as an OFDM symbol with long normal CP duration) and a second subset of the second set is determined to have a short bit duration (e.g., their transmission time corresponds to transmission on a short OFDM symbol, such as an OFDM symbol with short normal CP duration). The first and second subsets are determined based on any of a sequence duration, a number of bits per sequence, an index of an OFDM symbol indicating the beginning of sequence transmission.

The RF front-end carrier frequency(ies) and/or bandwidth(s) may be determined in terms of any of one or more subcarrier indices, one or more RB indices, a number of subcarriers, a number of RBs, and/or an indication of the band of operation. The RF front-end may be tuned to the one or more configured carrier frequency(ies) by the selection and aggregation of signals from one or more bandpass filters at the RF front-end. Alternatively, the RF front-end may be tuned to the one or more configured carrier frequency(ies) by the dynamic configuration and aggregation of signals from one or more configurable bandpass filters at the RF front-end.

In an example, the WTRU may adjust the reference sequence(s) of the ULP receiver's correlators based on a received indication of CP mitigation. The WTRU may split the sequence bits into ordered subsets (e.g., lists) where each ordered subset (e.g., list) is determined to be included in a single OFDM, based on any of a configured number of bits per OFDM symbol, a sequence duration, and/or a sequence length, for example. In one alternative, the WTRU may prepend each list using one or more bits of the sequence at the end of the list where the duration of the one or more bits is equivalent to sum of the CP duration and a filler duration. The filler duration may either be preconfigured or signaled to the WTRU and may be dependent on the OFDM symbol duration, OOK symbol duration, and/or CP duration in the OFDM symbol. In another alternative, the WTRU may prepend each list using one or more zeros where the duration of the one or more zeros is equivalent to sum of the CP duration and a filler duration.

One or more positive and/or negative peaks may be generated at the output of one or more correlators are aggregated with proper scaling (e.g., positive and/or negative sign scaling) whilst accounting for proper delays between the peaks to differentiate between the configured one or more sequences. The one or more delays between aggregated peaks may be equivalent to the lengths of one or more subsequences that constitute a sequence from the configured one or more sequences.

In an embodiment, a WTRU equipped with a ULP receiver may be configured to detect an OOK modulated DCI and/or message. The WTRU may report its ULP receiver capability and receive ULP receiver configuration including timing, frequency, and/or frame structure information. The WTRU may configure the ULP receiver's RF front-end and correlators to detect a synchronization sequence based on received frequency and frame structure information. The WTRU may determine any of an index of an OFDM symbol indicating the beginning of the ULP signal transmission, a transmission data rate, and/or a ULP signal duration (e.g., frame size) based on the detected synchronization sequence. The WTRU may determine the number of bits (e.g., OOK symbols) in the ULP signal (e.g., based on the frame size) and split them into subsets based on the determined transmission data rate and configured OFDM symbol duration. The WTRU may determine the bit (e.g., OOK symbol) duration for each subset based on the determined starting OFDM symbol index and association of subsets to the starting and/or subsequent OFDM symbols. The WTRU may discard the first one or more bits in each determined subset based on a configured/received indication of CP mitigation. The WTRU may utilize the remaining bits (e.g., OOK symbols) in all the subsets to detect errors based on availability of *N_{FCS}* frame check sequence bits at the end of the frame as determined by the frame structure information. The WTRU may determine an action as part of the frame structure and configures the ULP receiver to send an interrupt, and sends one or more information elements received in the ULP signal, to the main transceiver.

In an example, the WTRU may perform time and/or frequency re-synchronization using one or more re-synchronization sequences received in-between the subsets of bits (e.g., OOK symbols) based on configured frame structure. The need for re-synchronization might be due to the presence of a CP duration in each OFDM symbol that is not consistent with ULP signal's bit (e.g., OOK symbol) duration or due to the long duration of the ULP signal transmission.

The WTRU may determine the beginning of a DCI-based ULP signal based on explicitly received timing information such as a DRX cycle or implicitly indicated timing information such as sequence-based LP-WUS with a configured time offset. The WTRU may also determine the beginning of a message-based ULP signal based on explicitly received timing information in, for example, a DCI-based ULP signal. Subsequently, the frame structure of the ULP signal may not require a synchronization sequence at the beginning. Additionally, information about ULP signal's transmission rate and size (e.g., number of bits) may be fixed and known a-priori (e.g., for DCI-based ULP signal) or configurable (e.g., for message-based ULP signals) and indicated by other ULP signals (e.g., DCI-based ULP signals) or information fields with known structure at the beginning of the ULP signal (e.g., a header)

The WTRU may demodulate and decode all bits in all subsets without discarding based on a determined indication (e.g., received explicitly as part of configuration or determined implicitly as a default configuration) of CP distribution across bits (e.g., OOK symbols) in any OFDM symbol.

The WTRU determines the bit duration based on configured subcarrier spacing (SCS) and CP format (e.g., normal or extended) in addition to the OFDM symbol index. For example, in an OFDM system utilizing a SCS of 30 kHz and extended CP format, the OFDM symbol duration is fixed and therefore independent of the OFDM symbol index. In this case, the ULP signal's bit (e.g., OOK symbol) duration may also be fixed and independent of the OFDM symbol index. On the other hand, in an OFDM system utilizing a SCS of 15 kHz and normal CP format, the OFDM symbol duration is variable and dependent on the OFDM symbol index. In this case, the ULP signal's bit (e.g., OOK symbol) duration may also be variable and dependent on the OFDM symbol index. A long ULP signal's bit (e.g., OOK Symbol) duration is considered during OFDM symbols of indices zero and seven, and a short ULP signal's bit (e.g., OOK Symbol) duration is considered for all other OFDM symbols in a slot/subframe.

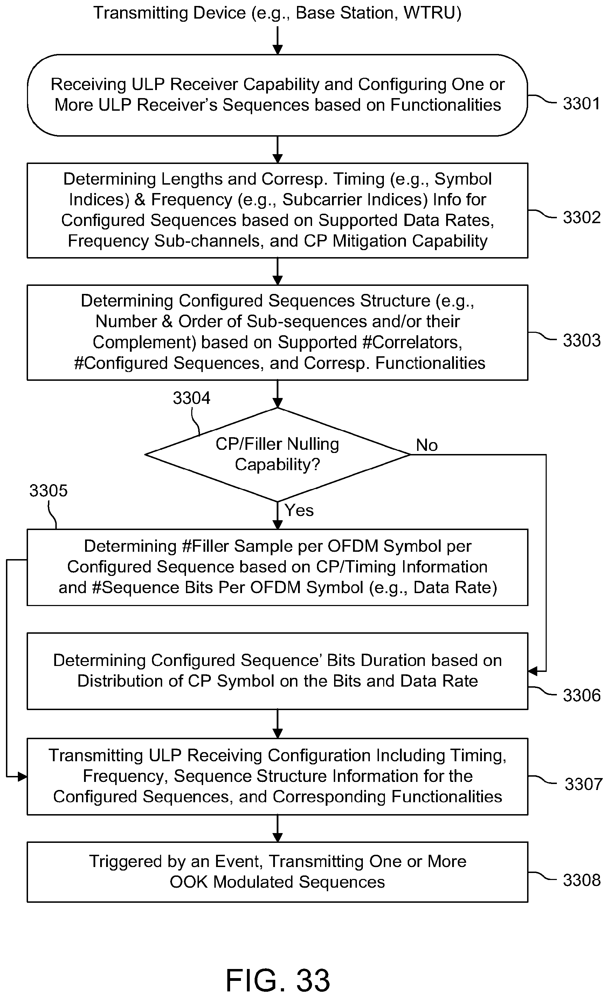

FIG. 33 illustrates a flow chart of a transmitting device's (e.g., WTRU, BS, etc.) actions to transmit an OOK modulated sequence. As shown, a device (e.g., a base station (BS), a WTRU/UE) supporting transmission to one or more ULP receivers is configured to transmit OOK modulated sequences by performing the following: receiving the ULP receiver capability and configuring one or more sequences based on received capability and number of supported functionalities 3301; determining one or more lengths (e.g., number of OFDM symbols or slots) for the configured sequences and corresponding timing and frequency information (e.g., OFDM symbols' and RBs'/subcarriers' indices) based on the ULP receiver's supported data rates, supported frequency sub-channels, CP mitigation capability, number of configured sequences, and corresponding functionalities 3302; determining one or more structures for the one or more sequences (e.g., number and order of sub-sequences and/or their complement per configured sequence) based on the ULP receiver's supported number of correlators, number of configured sequences, and corresponding functionalities 3303; in case CP/filler nulling is supported by the receiver 3304, determining a number of filler samples per OFDM symbol per configured sequence based on timing information (e.g., OFDM symbols' indices, number of sequence bits per OFDM symbol, and/or CP mitigation capability) 3305; transmitting the ULP receiver configuration including timing, frequency, sequence structure information for the one or more configured sequence(s), and corresponding functionalities 3307; and/or, triggered by an event, transmitting one or more OOK modulated sequences 3308.

The ULP receiver capability may include any of a number of RF front-end band-pass filter and a corresponding carrier frequency and bandwidth, an indication of passive and/or active gain stage and corresponding gain(s), a supported number of correlators, an indication of supported sequence structures, and indication of sequence-based and/or DCI-based detection of OOK modulated signals.

The ULP receiver capability may include an indication of one or more configurable RF front-end bandpass filter(s) and corresponding range of carrier frequency and bandwidth.

The determination of the number of filler samples per OFDM symbol per configured sequence may further be based on the sequence bit duration (e.g., OOK symbol duration) the system subcarrier spacing and configured cyclic prefix format (e.g., normal or extended) and duration.

A configured sequence of the one or more sequences comprises a first set of sub-sequences wherein a first subset of the first set is configured to have a long bit duration and a second subset of the first set is configured to have a short bit duration.

The first and second subsets of the first set of sub-sequences are configured based on any of a configured sequence duration, a configured number of sub-sequences per sequence, a configured number of bits per sub-sequence, a configured index of an OFDM symbol indicating the beginning of the configured sequence transmission.

A configured sequence of the one or more sequences comprises a second set of bits wherein a first subset of the second set is configured to have a long bit duration and a second subset of the second set is configured to have a short bit duration.

The first and second subsets of the second set of bits are configured based on any of a configured sequence duration, a configured number of bits per sequence, a configured index of an OFDM symbol indicating the beginning of the configured sequence transmission.

The one or more RF front-end carrier frequencies and/or bandwidths are signaled in terms of any of one or more subcarrier indices, one or more RB indices, a number of subcarriers, a number of RBs, and an indication of a band of operation.

The configuration of the one or more bit durations may further be based on the system subcarrier spacing and configured cyclic prefix format (e.g., normal or extended).

The triggering event may be a determination of a received signal strength for one or more dormant cells above a configured threshold and the one or more OOK modulated sequences are wake up/activation sequences for the one or more dormant cells.

The transmitted one or more OOK modulated sequences may be multiplexed in the code and/or frequency domain and may be transmitted over the same channel.

The transmitted one or more OOK modulated sequences may be multiplexed in the frequency domain with other one or more signals. The other one or more signals may be modulated using OOK and addressed to ULP receivers and/or may be modulated using PSK/QAM and addressed to main receivers.

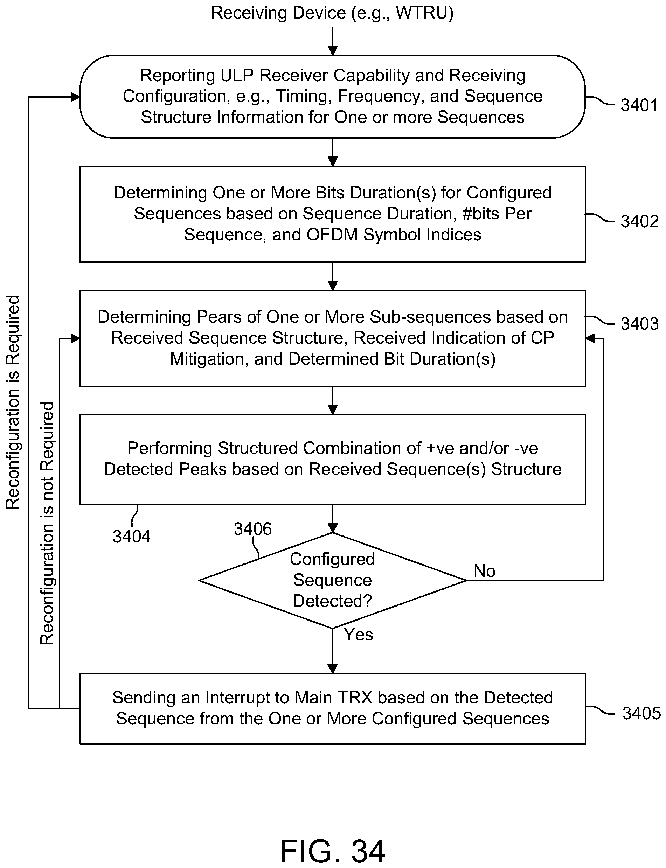

FIG. 34 illustrates a flow chart of a receiving device (e.g., WTRU) actions to receive and detect an OOK modulated sequence. As shown, a device equipped with a ULP receiver is configured to detect an OOK modulated sequence by performing the following: reporting ULP receiver capability and receiving ULP receiver configuration including timing, frequency, and sequence structure information for one or more sequence(s) 3401; determining one or more bit duration(s) for each of the one or more sequences based on the sequence duration, number of bits per sequence, and OFDM symbols' indices over which the sequence is transmitted 3402; tuning the RF front-end to a configured carrier frequency and bandwidth (e.g., based on received frequency information) and configuring a rectification circuit for down-conversion based on sequence transmission rate; detecting peaks of one or more (sub-)sequences using ULP receiver's correlators, based on the received sequence structure, a received indication of CP mitigation, and determined bit durations 3403; determining a first sequence from the one or more sequences based on a combination of positive and/or negative detected peaks and the sequence structure 3404; and/or, sending an interrupt to the main transceiver based on the detected first sequence from the one or more configured sequences 3405 when the sequence is detected 3406.

The ULP receiver capability may include any of a number of RF front-end band-pass filter and a corresponding carrier frequency and bandwidth, an indication of passive and/or active gain stage and corresponding gain(s), a supported number of correlators, an indication of supported sequence structures, and indication of sequence-based and/or DCI-based detection of OOK modulated signals.

The ULP receiver capability may include an indication of one or more configurable RF front-end bandpass filter(s) and corresponding range of carrier frequency and bandwidth.

A sequence of the one or more sequences comprises a first set of sub-sequences wherein a first subset of the first set is determined to have a long bit duration and a second subset of the first set is determined to have a short bit duration.

The first and second subsets of the first set of sub-sequences are determined based on any of a sequence duration, a number of sub-sequences per sequence, a number of bits per sub-sequence, an index of an OFDM symbol indicating the beginning of sequence transmission.

A sequence of the one or more sequences comprises a second set of bits wherein a first subset of the second set is determined to have a long bit duration and a second subset of the second set is determined to have a short bit duration.

The first and second subsets of the second set of bits are determined based on any of a sequence duration, a number of bits per sequence, an index of an OFDM symbol indicating the beginning of sequence transmission.

One or more RF front-end carrier frequencies and/or bandwidths are determined in terms of any of one or more subcarrier indices, one or more RB indices, a number of subcarriers, a number of RBs, and an indication of a band of operation.

The RF front-end may be tuned to one or more configured carrier frequencies by the selection and aggregation of signals from one or more bandpass filters at the RF front-end.

The RF front-end may be tuned to one or more configured carrier frequencies by the dynamic configuration and aggregation of signals from one or more configurable bandpass filters at the RF front-end.

The determination of the one or more bit durations may further be based on the system subcarrier spacing and configured cyclic prefix format (e.g., normal or extended).

The receiving device (e.g. WTRU) adjusts the reference sequence(s) of the ULP receiver's correlators based on a received indication of CP mitigation.

The receiving device (e.g. WTRU) splits the sequence bits into ordered subsets (e.g., lists) where each ordered subset (e.g., list) is determined to be included in a single OFDM (e.g., based on any of a configured number of bits per OFDM symbol) a sequence duration, and/or a sequence length.

The receiving device (e.g. WTRU) prepends each list using one or more bits of the sequence at the end of the list where the duration of the one or more bits is equivalent to sum of the CP duration and a filler duration.

The receiving device (e.g. WTRU) prepends each list using one or more zeros where the duration of the one or more zeros is equivalent to sum of the CP duration and a filler duration.

The filler duration may either be preconfigured or signaled to the WTRU and is dependent on the OFDM symbol duration, OOK symbol duration, and CP duration in the OFDM symbol.

One or more positive and/or negative peaks generated at the output of one or more correlators are aggregated with proper scaling (e.g., positive and/or negative sign scaling) whilst accounting for proper delays between the peaks to differentiate between the configured one or more sequences.

The one or more delays between aggregated peaks are equivalent to the lengths of one or more subsequences that constitute a sequence from the configured one or more sequences.

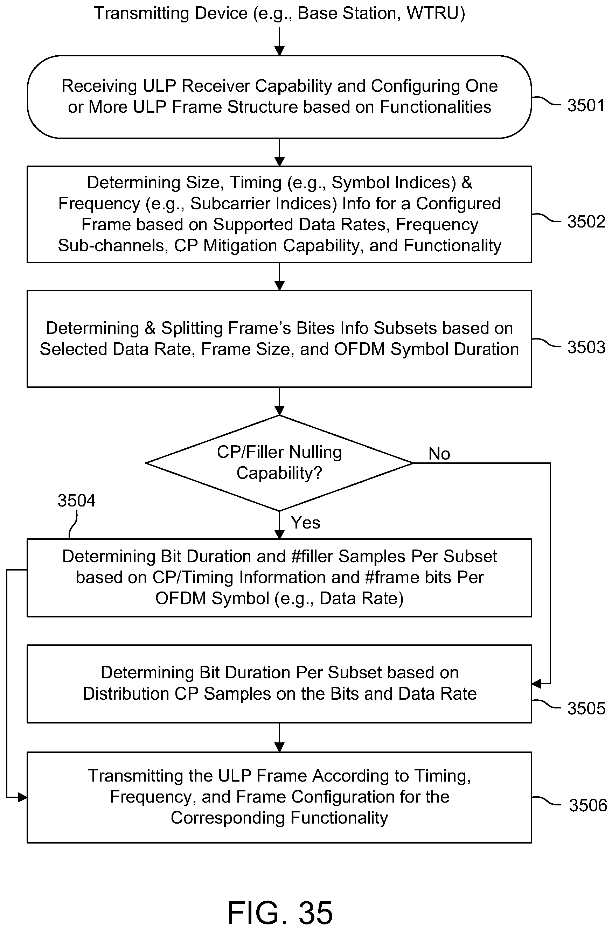

FIG. 35 illustrates a flow chart of a transmitting device's (e.g., WTRU, BS, etc.). actions to transmit an OOK modulated DCl/message. As shown, a device (e.g., a base station (BS), a WTRU/UE) supporting transmission to one or more ULP receivers is configured to transmit OOK modulated sequences by performing the following: receiving the ULP receiver capability, configuring, and transmitting one or more frame structures information based on ULP receiver capability and supported functionalities 3501; determining lengths (e.g., number of OFDM symbols or slots) for the configured sequences and corresponding timing and frequency information (e.g., OFDM symbols' and RBs'/subcarriers' indices) based on the ULP receiver's supported data rates, supported frequency sub-channels, CP mitigation capability, number of configured sequences, and corresponding functionalities determining timing and frequency information (e.g., starting OFDM symbol's and RBs'/subcarriers' indices) of a first frame structure based on the ULP receiver's supported data rates, supported frequency sub-channels, CP mitigation capability, and/or a first functionality 3502; determining and splitting the first frame's bits (e.g., OOK symbols) into subsets based on a selected ULP data rate and an OFDM symbol duration 3503; determining a bit duration and a number of filler samples for each subset based on a subset size, a number of subsets, a CP mitigation capability, and timing information (e.g., starting OFDM symbol index) 3504; determining a bit duration per sub-set 3505; and transmitting the first frame according to the timing, frequency, and frame structure configuration corresponding to the first functionality 3506.

The ULP receiver capability may include any of a number of RF front-end band-pass filter and a corresponding carrier frequency and bandwidth, an indication of passive and/or active gain stage and corresponding gain(s), supported data rates, an indication of supported frame structures, and indication of sequence-based and/or DCI-based detection of OOK modulated signals.

The ULP receiver capability may include an indication of one or more configurable RF front-end bandpass filter(s) and corresponding range of carrier frequency and bandwidth.

The selection of the bit duration and the number of filler samples per subset (e.g., OFDM symbol per configured frame structure) may further be based on the system subcarrier spacing and configured cyclic prefix format (e.g., normal or extended) and duration.

The subsets of bits comprise a first group of subsets and a second group of subsets wherein the first group is configured to have a long bit duration and the second group is configured to have a short bit duration.

The first and second groups are configured based on any of a configured frame duration/size, a configured number of bits per frame, a configured index of an OFDM symbol indicating the beginning of the configured frame transmission.

The one or more RF front-end carrier frequencies and/or bandwidths are signaled in terms of any of one or more subcarrier indices, one or more RB indices, a number of subcarriers, a number of RBs, and an indication of a band of operation.

The starting OFDM symbol may be indicated by a preamble or header sequence from one or more configured sequences according to the configured frequency information and any of the one or more frame structure(s) information.

The number of bits may be indicated using any of a configured DCI/message size and a preamble/header sequence from one or more configured sequences.

The transmission data rate may be indicated using any of a configured value (e.g., configured in timing information) and an indicated value according to a transmitted preamble/header sequence from one or more configured sequences.

The transmitting device (e.g., BS, WTRU) may enable detection of bits (e.g., OOK symbols) errors in all the subsets by incorporating N_FCS frame check sequence bits at the end of the frame as configured in the frame structure information.

The transmitting device (e.g., BS, WTRU) may incorporate a preamble/header sequence at the beginning of a frame structure for time and/or frequency synchronization.

The transmitting device (e.g., BS, WTRU) may further incorporate one or more resynchronization sequences in-between the subsets of bits (e.g., OOK symbols) according to the configured frame structure for time and/or frequency resynchronization.

The transmitting device (e.g., BS, WTRU) may indicate the beginning of a DCI-based ULP signal (e.g., starting OFDM symbol index) based on any of explicitly indicated timing information such as a DRX cycle and implicitly indicated timing information such as sequence-based LP-WUS with a configured time offset.

The transmitting device (e.g., BS, WTRU) may indicate the beginning of a message-based ULP signal (e.g., starting OFDM symbol) based on explicitly signaled/indicated timing information in (e.g., DCI-based ULP signal).

Information about ULP signal's transmission rate and size (e.g., number of bits) may be fixed and configured a-priori (e.g., for DCI-based ULP signal).

Information about ULP signal's transmission rate and size (e.g., number of bits) may be configurable (e.g., for message-based ULP signals) and indicated by other ULP signals (e.g., DCI-based ULP signals) or information fields with known structure at the beginning of the ULP signal (e.g., a header).

The transmitting device (e.g., BS, WTRU) may modulate and encode all bits in all subsets without accounting for an OFDM symbol CP and/or filler samples duration based on an indication of CP distribution across bits (e.g., OOK symbols) in any OFDM symbol.

The indication of CP distribution may be signaled explicitly as part of configuration or implicitly (e.g., as a default configuration).

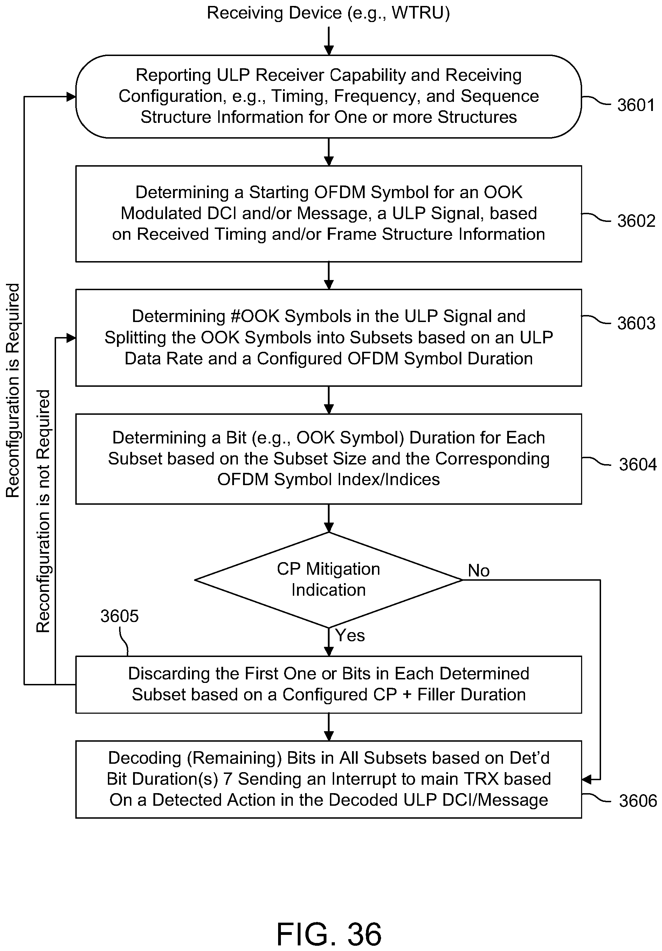

FIG. 36 illustrates a flow chart of a receiving device's (e.g., WTRU) actions to receive and detect an OOK modulated DCI and/or message. As shown, a device equipped with a ULP receiver is configured to detect an OOK modulated DCI and/or message by performing the following: reporting ULP receiver capability and receiving ULP receiver configuration including timing, frequency, and one or more frame (e.g., DCI or message) structure(s) information 3601; determining a starting OFDM symbol for an OOK modulated DCI or message (e.g., a ULP signal) based on any of a received timing and frame structure information 3602; determining a number of bits (e.g., OOK symbols) in the ULP signal and splitting the OOK symbols into subsets based on a transmission data rate and a configured OFDM symbol duration 3603; determining a bit (e.g., OOK symbol) duration for each subset based on any of a subset size, the index of the starting OFDM symbol, and correspondence of subsets to OFDM symbols' indices 3604; discarding the first one or more bits in each determined subset based on a configured/received indication of CP mitigation 3605; and/or, decoding the remaining bits in all the subsets based on the determined bit duration(s) and sending an interrupt to the main transceiver based on a detected action in the decoded DCl/message 3606.

The starting OFDM symbol may be determined based on the detection of a preamble or header sequence from one or more configured sequences according to the received frequency information and any of the one or more frame structure(s) information.

The number of bits may be determined based on any of a configured DCI/message size and a determined DCl/message size according to a detected preamble/header sequence from one or more configured sequences.

The transmission data rate may be determined based on any of a configured value (e.g., received in timing information) and a determined value according to a detected preamble/header sequence from one or more configured sequences.

The receiving device (e.g. WTRU) may further utilize the remaining bits (e.g., OOK symbols) in all the subsets to detect errors based on availability of N_FCS frame check sequence bits at the end of the frame as determined by the frame structure information.

The receiving device (e.g. WTRU) may further relay one or more information elements from the ULP receiver to the main transceiver as part of the interrupt signal.

The receiving device (e.g. WTRU) may further utilize the preamble/header sequence for time and/or frequency synchronization.

The receiving device (e.g. WTRU) may further perform time and/or frequency resynchronization using one or more resynchronization sequences received in-between the subsets of bits (e.g., OOK symbols) based on configured frame structure.

The receiving device (e.g. WTRU) may determine the beginning of a DCI-based ULP signal (e.g., starting OFDM symbol index) based on any of explicitly received timing information such as a DRX cycle and implicitly indicated timing information such as sequence-based LP-WUS with a configured time offset.

The receiving device (e.g. WTRU) may determine the beginning of a message-based ULP signal (e.g., starting OFDM symbol) based on explicitly received timing information in (e.g., DCI-based ULP signal).

Information about ULP signal's transmission rate and size (e.g., number of bits) may be fixed and known a-priori e.g., for DCI-based ULP signal).

Information about ULP signal's transmission rate and size (e.g., number of bits) may be configurable (e.g., for message-based ULP signals) and indicated by other ULP signals (e.g., DCI-based ULP signals) or information fields with known structure at the beginning of the ULP signal (e.g., a header).

The receiving device (e.g. WTRU) may demodulate and decode all bits in all subsets without discarding based on a determined indication of CP distribution across bits (e.g., OOK symbols) in any OFDM symbol.

The indication of CP distribution may be determined based on an explicit reception as part of configuration or an implicit indication as a default configuration.

The receiving device (e.g. WTRU) may further determine the bit duration based on any of a configured subcarrier spacing (SCS) and a configured CP format (e.g., normal or extended) in addition to the OFDM symbol index.

The decoding of the (remaining) bits in all subsets involves the sampling of the received signal according to the determined bit duration(s) and deciding on the samples, such as whether the received OOK symbol corresponds to a bit 0 or a bit 1.

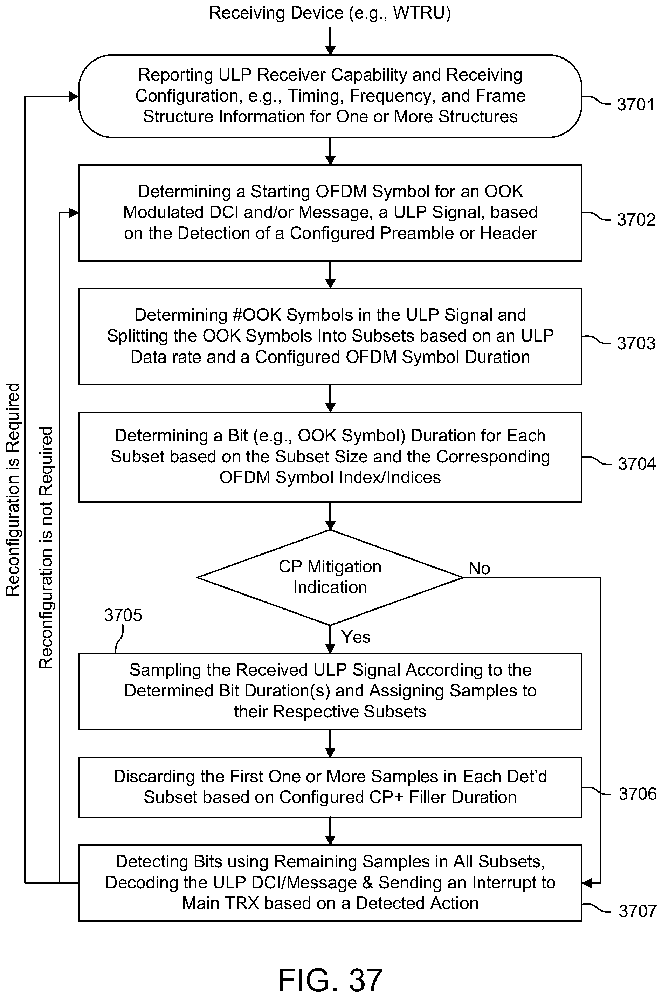

FIG. 37 illustrates a flow chart of a device's (e.g., WTRU) actions to receive and detect an OOK modulated DCI and/or message. As shown, a device equipped with a ULP receiver is configured to detect an OOK modulated DCI and/or message by performing the following: reporting ULP receiver capability and receiving ULP receiver configuration including timing, frequency, and one or more frame (e.g., DCI or message) structure(s) information 3701; determining a starting OFDM symbol for a received OOK modulated DCI or message (e.g., a ULP signal) based on the detection of a configured preamble or header 3702; determining a number of bits (e.g., OOK symbols) in the ULP signal and splitting the OOK symbols into subsets based on a transmission data rate and a configured OFDM symbol duration 3703; determining a bit (e.g., OOK symbol) duration for each subset based on the subset size and correspondence of subsets to OFDM symbols' indices 3704; sampling the received ULP signal according to the determined bit duration(s) and assigning samples to their respective subsets 3705; discarding the first one or more bits in each determined subset based on a configured/received indication of CP mitigation 3706; and/or, detecting bits using remaining samples in all the subsets, decoding the received ULP signal, and sending an interrupt to the main transceiver based on a detected action in the decoded signal 3707.

The detection of bits using the remaining samples may be based on comparison of the samples' values against a predetermined threshold and deciding of whether the sample corresponds to bit 0 or bit 1.

The detection of bits using the remaining samples may be based on comparison of the values of two or more consecutive samples and deciding of whether the two or more consecutive samples corresponds to bit 0 or bit 1.

As described herein, a higher layer may refer to one or more layers in a protocol stack, or a specific sublayer within the protocol stack. The protocol stack may comprise one or more layers in a WTRU or a network node (e.g., eNB, gNB, other functional entity, etc.), where each layer may have one or more sublayers. Each layer/sublayer may be responsible for one or more functions. Each layer/sublayer may communicate with one or more of the other layers/sublayers, directly or indirectly. In some cases, these layers may be numbered, such as Layer 1, Layer 2, and Layer 3. For example, Layer 3 may comprise one or more of the following: Non Access Stratum (NAS), Internet Protocol (IP), and/or Radio Resource Control (RRC). For example, Layer 2 may comprise one or more of the following: Packet Data Convergence Control (PDCP), Radio Link Control (RLC), and/or Medium Access Control (MAC). For example, Layer 3 may comprise physical (PHY) layer type operations. The greater the number of the layer, the higher it is relative to other layers (e.g., Layer 3 is higher than Layer 1). In some cases, the aforementioned examples may be called layers/sublayers themselves irrespective of layer number, and may be referred to as a higher layer as described herein. For example, from highest to lowest, a higher layer may refer to one or more of the following layers/sublayers: a NAS layer, an RRC layer, a PDCP layer, an RLC layer, a MAC layer, and/or a PHY layer. Any reference herein to a higher layer in conjunction with a process, device, or system will refer to a layer that is higher than the layer of the process, device, or system. In some cases, reference to a higher layer herein may refer to a function or operation performed by one or more layers described herein. In some cases, reference to a high layer herein may refer to information that is sent or received by one or more layers described herein. In some cases, reference to a higher layer herein may refer to a configuration that is sent and/or received by one or more layers described herein.

The methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method for use in a wireless transmit/receive unit, WTRU, the method comprising:
receiving ultra-low power, ULP, configuration information;
receiving an ULP signal comprising an orthogonal frequency divisional multiplex, OFDM, symbol, wherein the OFDM symbol comprises a plurality of on/off keying, OOK, modulated symbols;
determining a length of the plurality of OOK modulated symbols based on the received ULP configuration information and an OFDM symbol index, wherein a first OOK modulated symbol of the plurality of OOK modulated symbols is a guard symbol; and
decoding remaining OOK modulated symbols of the plurality of OOK symbols.

2. The method of claim 1, wherein the first OOK modulated symbol of the plurality of OOK modulated symbols comprises cyclic prefix, CP, samples and filler samples.

3. The method of claim 2, wherein the ULP configuration information includes an indication of a number of CP samples and an indication of a number of filler samples.

4. The method of claim 1, further comprising:
discarding, by the WTRU, a first OOK modulated symbol of the plurality of OOK modulated symbols, thereby reducing inter-OFDM symbol interference.

5. The method of claim 1, wherein the ULP configuration information comprises frequency information, time information, sequence structure information, a sequence transmission rate, or an indication to enable CP mitigation.

6. The method of claim 1, wherein the OFDM symbol index indicates a short OFDM symbol, and the received ULP configuration information indicates a short OOK modulated symbol length.

7. The method of claim 1, wherein the OFDM symbol index indicates a long OFDM symbol, and the received ULP configuration information indicates a long OOK modulated symbol length.

8. A wireless transmit/receive unit, WTRU, comprising:
a transceiver configured to:
receive ultra-low power, ULP, configuration information; and
receive an ULP signal comprising an orthogonal frequency divisional multiplex, OFDM, symbol, wherein the OFDM symbol comprises a plurality of on/off keying, OOK, modulated symbols; and
a processor configured to:
determine a length of the plurality of OOK modulated symbols based on the received ULP configuration information and an OFDM symbol index, wherein a first OOK modulated symbol of the plurality of OOK modulated symbols is a guard symbol; and
decode remaining OOK modulated symbols of the plurality of OOK symbols.

9. The WTRU of claim 8, wherein the first OOK modulated symbol of the plurality of OOK modulated symbols comprises cyclic prefix, CP, samples and filler samples.

10. The WTRU of claim 9, wherein the ULP configuration information includes an indication of a number of CP samples and an indication of a number of filler samples.

11. The WTRU of claim 10, wherein the number of CP samples or the number of filler samples is variable.

12. The WTRU of claim 8, wherein the processor is further configured to discard a first OOK symbol, thereby reducing inter-OFDM symbol interference.

13. The WTRU of claim 8, wherein the ULP configuration information comprises frequency information, time information, sequence structure information, a sequence transmission rate, or an indication to enable CP mitigation.

14. The WTRU of claim 8, wherein the OFDM symbol index indicates a short OFDM symbol, and the received ULP configuration information indicates a short OOK modulated symbol length.

15. The WTRU of claim 8, wherein the OFDM symbol index indicates a long OFDM symbol, and the received ULP configuration information indicates a long OOK modulated symbol length.

## Patentansprüche

1. Verfahren zur Verwendung in einer Drahtlos-Sende- und - Empfangseinheit (Wireless Transmit/Receive Unit, WTRU), wobei das Verfahren umfasst:
Empfangen von Ultra-Low Power (ULP)-Konfigurationsinformationen;
Empfangen eines ULP-Signals, das ein Orthogonal Frequency Division Multiplex (OFDM)-Symbol umfasst, wobei das OFDM-Symbol mehrere On/Off Keying (OOK)-modulierte Symbole umfasst;
Bestimmen einer Länge der mehreren OOK-modulierten Symbole auf der Grundlage der empfangenen ULP-Konfigurationsinformationen und eines OFDM-Symbolindex, wobei ein erstes OOK-moduliertes Symbol der mehreren OOK-modulierten Symbole ein Schutzsymbol ist; und
Decodieren der verbleibenden OOK-modulierten Symbole der mehreren OOK-Symbole.

2. Verfahren nach Anspruch 1, wobei das erste OOK-modulierte Symbol der mehreren OOK-modulierten Symbole Cyclic Prefix (CP)-Abtastungen und Füllabtastungen umfasst.

3. Verfahren nach Anspruch 2, wobei die ULP-Konfigurationsinformationen eine Angabe einer Anzahl von CP-Abtastungen und eine Angabe einer Anzahl von Füllabtastungen umfassen.

4. Verfahren nach Anspruch 1, des Weiteren umfassend:
Verwerfen, durch die WTRU, eines ersten OOK-modulierten Symbols der mehreren OOK-modulierten Symbole, wodurch die Interferenz zwischen OFDM-Symbolen verringert wird.

5. Verfahren nach Anspruch 1, wobei die ULP-Konfigurationsinformationen Frequenzinformationen, Zeitinformationen, Sequenzstrukturinformationen, eine Sequenzübertragungsrate oder eine Angabe zum Aktivieren der CP-Minderung umfassen.

6. Verfahren nach Anspruch 1, wobei der OFDM-Symbolindex ein kurzes OFDM-Symbol angibt und die empfangenen ULP-Konfigurationsinformationen eine kurze Länge eines OOK-modulierten Symbols angeben.

7. Verfahren nach Anspruch 1, wobei der OFDM-Symbolindex ein langes OFDM-Symbol angibt und die empfangenen ULP-Konfigurationsinformationen eine lange Länge eines OOK-modulierten Symbols angeben.

8. Drahtlos-Sende- und -Empfangseinheit (Wireless Transmit/Receive Unit, WTRU), umfassend:
einen Sender-Empfänger, der eingerichtet ist zum:
Empfangen von Ultra-Low Power (ULP)-Konfigurationsinformationen; und
Empfangen eines ULP-Signals, das ein Orthogonal Frequency Division Multiplex (OFDM)-Symbol umfasst, wobei das OFDM-Symbol mehrere On/Off Keying (OOK)-modulierte Symbole umfasst; und
einen Prozessor, der eingerichtet ist zum:
Bestimmen einer Länge der mehreren OOK-modulierten Symbole auf der Grundlage der empfangenen ULP-Konfigurationsinformationen und eines OFDM-Symbolindex, wobei ein erstes OOK-moduliertes Symbol der mehreren OOK-modulierten Symbole ein Schutzsymbol ist; und
Decodieren der verbleibenden OOK-modulierten Symbole der mehreren OOK-Symbole.

9. WTRU nach Anspruch 8, wobei das erste OOK-modulierte Symbol der mehreren OOK-modulierten Symbole Cyclic Prefix (CP)-Abtastungen und Füllabtastungen umfasst.

10. WTRU nach Anspruch 9, wobei die ULP-Konfigurationsinformationen eine Angabe einer Anzahl von CP-Abtastungen und eine Angabe einer Anzahl von Füllabtastungen umfassen.

11. WTRU nach Anspruch 10, wobei die Anzahl von CP-Abtastungen oder die Anzahl von Füllabtastungen variabel ist.

12. WTRU nach Anspruch 8, wobei der Prozessor des Weiteren dazu eingerichtet ist, ein erstes OOK-Symbol zu verwerfen, wodurch die Interferenz zwischen OFDM-Symbolen verringert wird.

13. WTRU nach Anspruch 8, wobei die ULP-Konfigurationsinformationen Frequenzinformationen, Zeitinformationen, Sequenzstrukturinformationen, eine Sequenzübertragungsrate oder eine Angabe zum Aktivieren der CP-Minderung umfassen.

14. WTRU nach Anspruch 8, wobei der OFDM-Symbolindex ein kurzes OFDM-Symbol angibt und die empfangenen ULP-Konfigurationsinformationen eine kurze Länge eines OOK-modulierten Symbols angeben.

15. WTRU nach Anspruch 8, wobei der OFDM-Symbolindex ein langes OFDM-Symbol angibt und die empfangenen ULP-Konfigurationsinformationen eine lange Länge eines OOK-modulierten Symbols angeben.

## Revendications

1. Procédé à utiliser dans une unité émettrice-réceptrice sans fil, WTRU, le procédé comprenant :
la réception d'informations de configuration de puissance ultra faible, ULP ;
la réception d'un signal ULP comprenant un symbole de multiplexage par répartition de fréquence orthogonale, OFDM, dans lequel le symbole OFDM comprend une pluralité de symboles modulés par modulation tout ou rien, OOK ;
la détermination d'une longueur de la pluralité de symboles modulés OOK sur la base des informations de configuration ULP reçues et d'un indice de symbole OFDM, dans lequel un premier symbole modulé OOK parmi la pluralité de symboles modulés OOK est un symbole de garde ; et
le décodage des symboles modulés OOK restants parmi la pluralité de symboles modulés OOK.

2. Procédé selon la revendication 1, dans lequel le premier symbole modulé OOK parmi la pluralité de symboles modulés OOK comprend des échantillons de préfixe cyclique, CP, et des échantillons de remplissage.

3. Procédé selon la revendication 2, dans lequel les informations de configuration ULP incluent une indication d'un nombre d'échantillons CP et une indication d'un nombre d'échantillons de remplissage.

4. Procédé selon la revendication 1, comprenant en outre :
le rejet, par la WTRU, d'un premier symbole modulé OOK parmi la pluralité de symboles modulés OOK, réduisant ainsi une interférence entre symboles OFDM.

5. Procédé selon la revendication 1, dans lequel les informations de configuration ULP comprennent des informations de fréquence, des informations de temps, des informations de structure de séquence, un débit de transmission de séquence ou une indication d'activation d'atténuation de CP.

6. Procédé selon la revendication 1, dans lequel l'indice de symbole OFDM indique un symbole OFDM court, et les informations de configuration ULP reçues indiquent une longueur de symbole modulé OOK court.

7. Procédé selon la revendication 1, dans lequel l'indice de symbole OFDM indique un symbole OFDM long, et les informations de configuration ULP reçues indiquent une longueur de symbole modulé OOK long.

8. Unité émettrice-réceptrice sans fil, WTRU, comprenant :
un émetteur-récepteur configuré pour :
recevoir des informations de configuration de puissance ultra faible, ULP ; et
recevoir un signal ULP comprenant un symbole de multiplexage par répartition de fréquence orthogonale, OFDM, dans laquelle le symbole OFDM comprend une pluralité de symboles modulés par modulation tout ou rien, OOK ; et
un processeur configuré pour :
déterminer une longueur de la pluralité de symboles modulés OOK sur la base des informations de configuration ULP reçues et d'un indice de symbole OFDM, dans laquelle un premier symbole modulé OOK parmi la pluralité de symboles modulés OOK est un symbole de garde ; et
décoder les symboles modulés OOK restants parmi la pluralité de symboles modulés OOK.

9. WTRU selon la revendication 8, dans laquelle le premier symbole modulé OOK parmi la pluralité de symboles modulés OOK comprend des échantillons de préfixe cyclique, CP, et des échantillons de remplissage.

10. WTRU selon la revendication 9, dans laquelle les informations de configuration ULP incluent une indication d'un nombre d'échantillons CP et une indication d'un nombre d'échantillons de remplissage.

11. WTRU selon la revendication 10, dans laquelle le nombre d'échantillons CP ou le nombre d'échantillons de remplissage est variable.

12. WTRU selon la revendication 8, dans laquelle le processeur est en outre configuré pour rejeter un premier symbole modulé OOK, réduisant ainsi une interférence entre symboles OFDM.

13. WTRU selon la revendication 8, dans laquelle les informations de configuration ULP comprennent des informations de fréquence, des informations de temps, des informations de structure de séquence, un débit de transmission de séquence ou une indication d'activation d'atténuation de CP.

14. WTRU selon la revendication 8, dans laquelle l'indice de symbole OFDM indique un symbole OFDM court, et les informations de configuration ULP reçues indiquent une longueur de symbole modulé OOK court.

15. WTRU selon la revendication 8, dans laquelle l'indice de symbole OFDM indique un symbole OFDM long, et les informations de configuration ULP reçues indiquent une longueur de symbole modulé OOK long.
